(19) Europäisches Patentamt
European Patent Office
Office européen des brevets

(11) **EP 4 156 568 A1**

(12) **EUROPEAN PATENT APPLICATION**
published in accordance with Art. 153(4) EPC

(43) Date of publication:
**29.03.2023 Bulletin 2023/13**

(51) International Patent Classification (IPC):
**H04L 1/00** (2006.01)       **H04W 16/06** (2009.01)
**H04W 16/14** (2009.01)

(21) Application number: **21826672.4**

(22) Date of filing: **08.06.2021**

(52) Cooperative Patent Classification (CPC):
**H04L 1/00; H04W 16/06; H04W 16/14**

(86) International application number:
**PCT/CN2021/098776**

(87) International publication number:
**WO 2021/254207 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2020   CN 202010558954**

(71) Applicant: **HUAWEI TECHNOLOGIES CO., LTD.
Shenzhen, Guangdong 518129 (CN)**

(72) Inventors:
• **LIU, Chenchen**
  **Shenzhen, Guangdong 518129 (CN)**
• **LIANG, Dandan**
  **Shenzhen, Guangdong 518129 (CN)**
• **GAN, Ming**
  **Shenzhen, Guangdong 518129 (CN)**
• **ZHANG, Meihong**
  **Shenzhen, Guangdong 518129 (CN)**

(74) Representative: **Maiwald GmbH
Engineering
Elisenhof
Elisenstrasse 3
80335 München (DE)**

(54) **DATA FRAME SENDING METHOD, DATA FRAME RECEIVING METHOD, AND COMMUNICATION APPARATUS**

(57)    This application provides a data frame sending method, a data frame receiving method, and a communication apparatus. The data frame sending method includes: encoding first information by using a first encoder, to generate a first coded segment and a second coded segment; interleaving the first information by using M interleavers, to generate M pieces of information, where the M pieces of information one-to-one correspond to the M interleavers; encoding the M pieces of information by using the first encoder, to generate 2M coded segments; generating a data frame, where the data frame includes N coded segments, and the N coded segments include all or a portion of the first coded segment, the second coded segment, and the 2M coded segments; and sending the data frame through at least two subchannels in N subchannels. In this way, a receive end can restore the first information based on coded segments of any two subchannels and information about an interleaver corresponding to the subchannels. This improves preamble puncturing flexibility and communication robustness.

FIG. 9

**Description**

This application claims priority to Chinese Patent Application No. 202010558954.X, filed with the China National Intellectual Property Administration on June 18, 2020 and entitled "DATA FRAME SENDING METHOD, DATA FRAME RECEIVING METHOD, AND COMMUNICATION APPARATUS", which is incorporated herein by reference in its entirety.

**TECHNICAL FIELD**

Embodiments of this application relate to the communication field, and more specifically, to a data frame sending method, a data frame receiving method, and a communication apparatus.

**BACKGROUND**

With the development of wireless local area network (wireless local area network, WLAN) technologies, a maximum channel bandwidth supported by each generation of standards gradually increases by using a channel bonding mechanism, from a 20 MHz channel bandwidth supported by the 802.11a/g standard to a 20 MHz/40 MHz channel bandwidth supported by the 802.11n standard, and then to a 20 MHz/40 MHz/80 MHz/160 MHz/80 MHz+80 MHz channel bandwidth supported by the 802.11ac standard. Future standards (for example, 802.11be) can support 240 MHz, 320 MHz, or even higher bandwidth.

However, a continuous channel bonding mechanism also has a disadvantage. In the 802.11ac standard, when a narrowband secondary channel of a bonded channel is busy, a transmit end cannot use a larger secondary channel. An 80 MHz channel is used as an example. If a secondary 20 MHz channel is busy, even if a secondary 40 MHz channel is idle, the transmit end can only use a bandwidth of a primary 20 MHz channel. This wastes an air interface resource of the secondary 40 MHz channel.

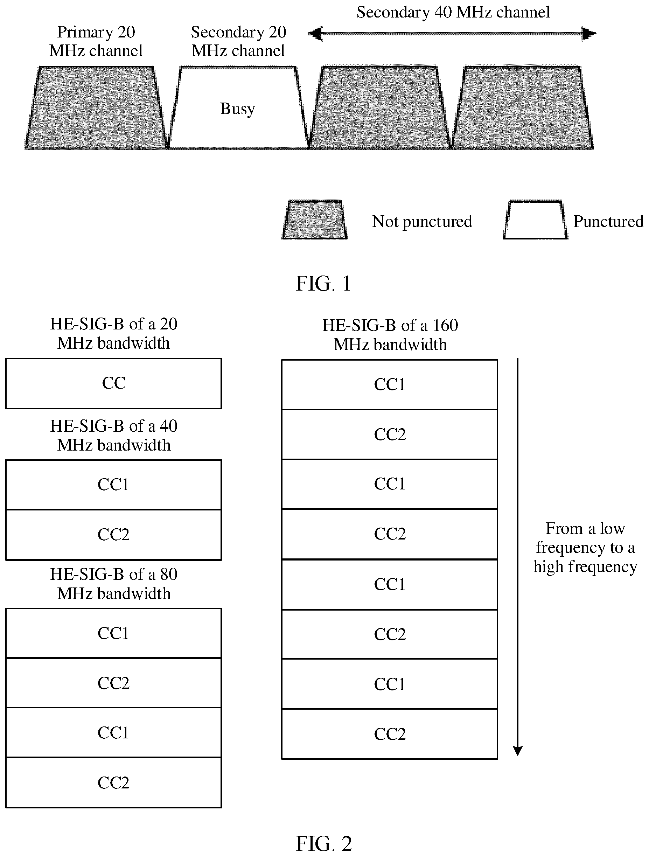

To resolve this problem, in addition to supporting continuous channel bonding in the 802.11ac standard, the 802.11ax standard further introduces a preamble puncturing mechanism, to further improve spectrum utilization. Preamble puncturing is called non-contiguous channel bonding (non-contiguous channel bonding, NCB) at the early stage of discussion. FIG. 1 shows an example of a preamble puncturing pattern.

In the conventional technology, some fields in a data frame, for example, a high efficient signal field B (high efficient signal field B, HE-SIG B), have a large length. Therefore, information in the fields needs to be transmitted via different subchannels.

For example, a concept of a content channel (content channel, CC) is introduced into the 802.11ax standard. As shown in FIG. 2, when a bandwidth of information carried by an HE-SIG-B is 20 MHz, the HE-SIG-B includes one content channel. The content channel corresponds to one subchannel. When a bandwidth of information carried by the HE-SIG-B is 40 MHz, the HE-SIG-B includes two content channels denoted as a CC1 and a CC2, the CC1 corresponds to one subchannel, and the CC2 corresponds to the other subchannel. When a bandwidth of a data packet is 80 MHz, the HE-SIG-B includes two content channels. In this case, the two content channels correspond to four subchannels according to a specified sequence, that is, the CC1, CC2, CC1, and CC2. When the bandwidth of the data packet is 160 MHz, further expansion is performed based on 80 MHz. The HE-SIG-B includes two content channels, and the two content channels correspond to eight subchannels in a specified sequence, that is, CC1, CC2, CC1, CC2, CC1, CC2, CC1, and CC2.

In the conventional technology, information carried on one content channel can only be restored after a receive end receives at least one CC1 and at least one CC2. Therefore, communication robustness is poor, and supported puncturing patterns are limited. For example, a pattern that 20M in which two CCIs or two CC2s are located is punctured at the same time is not supported.

**SUMMARY**

This application provides a data frame sending method, a data frame receiving method, and a communication apparatus, to improve communication robustness and puncturing flexibility.

According to a first aspect, a data frame sending method is provided, executed in a communication system in which a channel is divided into N subchannels, and N≥2. The method includes: A transmit device encodes first information by using a first encoder, to generate a first coded segment and a second coded segment, where the first encoder includes a 1/2 convolutional encoder, and the first information includes a portion or all of information corresponding to a preamble field in a data frame; interleaves the first information by using M interleavers, to generate M pieces of information, where the M pieces of information one-to-one correspond to the M interleavers, a $m^{th}$ piece of information in the M pieces of information is generated based on interleaving processing of a $m^{th}$ interleaver in the M interleavers, the $m^{th}$ piece of information corresponds to the $m^{th}$ interleaver, $m \in [2, M+1]$, and M≥1; encodes the M pieces of information by using the first encoder, to generate 2M coded segments; where a $(2m+1)^{th}$ coded segment and a $(2(m+1))^{th}$ coded segment in the 2M coded segments are generated after the $m^{th}$ piece of information is encoded; generates the data frame, where the data frame includes N coded segments, the N coded segments one-to-one correspond to the N subchannels, each subchannel carries a corresponding coded segment, and the N coded segments include all or a portion of the first coded segment, the second coded segment, and the 2M coded segments; and sends the data frame through at least two subchannels of the N subchannels.

According to the solution provided in this application, after to-be-sent target information is separately interleaved at a transmit end by using a plurality of interleavers, the interleaved information is further encoded, and the encoded information is separately sent through a plurality of subchannels, a receive end can restore the target information based on information on any two channels in the plurality of channels and information about an interleaver corresponding to the two channels. This improves flexibility of puncturing the plurality of channels and communication robustness.

Optionally, M=1.

Specifically, in an implementation, a size of one coded segment corresponds to one 20 MHz subchannel. To be specific, when M=1, four coded segments are generated according to the solution provided in this application. The four coded segments separately correspond to four subchannels in an 80 Hz bandwidth (a bandwidth of each subchannel is 20 MHz).

In this case, when a bandwidth of a channel used in the communication system provided in this application is 80 MHz, a value of N is 4. Therefore, when M=1, the four coded segments are generated according to the solution provided in this application, and each coded segment corresponds to one subchannel.

When the bandwidth of the channel used in the communication system provided in this application is 160 MHz, the value of N may be 8. Therefore, when M=1, the four coded segments are first generated according to the solution provided in this application, and each coded segment corresponds to one subchannel in an 80 MHz bandwidth. The 80 MHz bandwidth includes the four subchannels (the bandwidth of each subchannel is 20 MHz). Then, the four coded segments corresponding to the 80 MHz bandwidth may be replicated, and the four replicated coded segments are respectively carried on the four subchannels in another 80 MHz bandwidth of the 160 MHz channel.

By analogy, when the bandwidth of the channel used in the communication system provided in this application is Qx80 MHz, the value of N may be Qx4. Therefore, when M=1, the four coded segments are first generated according to the solution provided in this application, and each coded segment corresponds to one subchannel in the 80 MHz bandwidth. The 80 MHz bandwidth includes the four subchannels (the bandwidth of each subchannel is 20 MHz). Then, the four coded segments corresponding to the 80 MHz bandwidth may be replicated Q times, and the Qx4 replicated coded segments are respectively carried on four (Q-1) subchannels in another bandwidth of (Q-1)x80 MHz of the 160 MHz channel.

Optionally, a value of M is a result obtained by subtracting 1 from a result of rounding up N/2.

Specifically, in an implementation, the size of the coded segment corresponds to the 20 MHz subchannel. To be specific, when the value of M is the result obtained by subtracting 1 from a result of rounding up N/2, and the bandwidth of the channel used in the communication system provided in this application is 80 MHz, the value of N may be 4. The four coded segments are generated according to the solution provided in this application, and each coded segment corresponds to one subchannel.

When the bandwidth of the channel used in the communication system provided in this application is 160 MHz, the value of N is 8. When the value of M is the result obtained by subtracting 1 from a result of rounding up N/2 (the value is 3 in this case), eight coded segments are generated according to the solution provided in this application, and each coded segment corresponds to one subchannel.

By analogy, when the bandwidth of the channel used in the communication system provided in this application is Qx80 MHz, the value of N may be Qx4. When the value of M is the result obtained by subtracting 1 from a result of rounding up N/2 (the value is Qx2-1 in this case), Qx4 coded segments are generated according to the solution provided in this application, and each coded segment corresponds to one subchannel.

Optionally, the method further includes: determining the M interleavers according to a first mapping relationship, where the first mapping relationship includes information corresponding to an interleaver of each subchannel of the N subchannels, the $m^{th}$ interleaver is an interleaver corresponding to a $(2m+1)^{th}$ subchannel and a $(2(m+1))^{th}$ subchannel, the $(2m+1)^{th}$ subchannel is used to transmit the $(2m+1)^{th}$ coded segment, and the $(2(m+1))^{th}$ subchannel is used to transmit the $(2(m+1))^{th}$ coded segment.

According to a second aspect, a data frame sending method is provided, executed in a communication system in which a channel is divided into N subchannels, and N≥2. The method includes: A transmit device generates a first coded segment based on first information, where the first information includes a portion or all of information corresponding to a preamble field in a data frame; interleaves the first information by using M interleavers, to generate M pieces of information, where the M pieces of information one-to-one correspond to the M interleavers, a $m^{th}$ piece of information in the M pieces of information is generated based on interleaving processing of a $m^{th}$ interleaver in the M interleavers, the $m^{th}$ piece of information corresponds to the $m^{th}$ interleaver, m∈[2, M+1], and M≥1; encodes the M pieces of information by using a first encoder, to generate M coded segments, where the first encoder includes a recursive systematic convolutional encoder; generates the data frame, where the data frame includes N coded segments, the N coded segments one-to-one correspond to the N subchannels, each subchannel carries a corresponding coded segment, and the N coded segments include all or a portion of the first coded segment and the M coded segments; and sends the data frame through at least two subchannels of the N subchannels.

According to the solution provided in this application, after to-be-sent target information is separately interleaved at a transmit end by using a plurality of interleavers, the interleaved information is further encoded, and the encoded information is separately sent through a plurality of subchannels, a receive end can restore the target information based on information on any two channels in the plurality of channels and information about an interleaver corresponding to the two channels. This improves flexibility of puncturing the plurality of channels and communication robustness.

Optionally, M=3.

Specifically, in an implementation, a size of one coded segment corresponds to one 20 MHz subchannel. To be specific, when M=3, four coded segments are generated according to the solution provided in this application. The four coded segments separately correspond to four subchannels in an 80 Hz bandwidth (a bandwidth of each subchannel is 20 MHz).

In this case, when a bandwidth of a channel used in the communication system provided in this application is 80 MHz, a value of N is 4. Therefore, when M=3, the four coded segments are generated according to the solution provided in this application, and each coded segment corresponds to one subchannel.

When the bandwidth of the channel used in the communication system provided in this application is 160 MHz, the value of N may be 8. Therefore, when M=3, the four coded segments are first generated according to the solution provided in this application, and each coded segment corresponds to one subchannel in an 80 MHz bandwidth. The 80 MHz bandwidth includes the four subchannels (the bandwidth of each subchannel is 20 MHz). Then, the four coded segments corresponding to the 80 MHz bandwidth may be replicated, and the four replicated coded segments are respectively carried on the four subchannels in another 80 MHz bandwidth of the 160 MHz channel.

By analogy, when the bandwidth of the channel used in the communication system provided in this application is Qx80 MHz, the value of N may be Qx4. Therefore, when M=3, the four coded segments are first generated according to the solution provided in this application, and each coded segment corresponds to one subchannel in the 80 MHz bandwidth. The 80 MHz bandwidth includes the four subchannels (the bandwidth of each subchannel is 20 MHz). Then, the four coded segments corresponding to the 80 MHz bandwidth may be replicated Q times, and the Qx4 replicated coded segments are respectively carried on four (Q-1) subchannels in another bandwidth of (Q-1)x80 MHz of the 160 MHz channel.

Optionally, M=N-1.

Specifically, in an implementation, the size of the coded segment corresponds to the 20 MHz subchannel. To be specific, when the value of M is the result obtained by subtracting 1 from a result of rounding up N/2, and the bandwidth of the channel used in the communication system provided in this application is 80 MHz, the value of N may be 4. When M=N-1 (the value is 3 in this case), the four coded segments are generated according to the solution provided in this application, and each coded segment corresponds to one subchannel.

When the bandwidth of the channel used in the communication system provided in this application is 160 MHz, the value of N is 8. When M=N-1 (the value is 7 in this case), eight coded segments are generated according to the solution provided in this application, and each coded segment corresponds to one subchannel.

By analogy, when the bandwidth of the channel used in the communication system provided in this application is Qx80 MHz, the value of N may be Qx4. When M=N-1 (the value is Qx4-1 in this case), Qx4 coded segments are generated according to the solution provided in this application, and each coded segment corresponds to one subchannel.

Optionally, the method further includes: determining the M interleavers according to a first mapping relationship, where the first mapping relationship includes information corresponding to an interleaver of each subchannel of the N subchannels, the $m^{th}$ interleaver is an interleaver corresponding to a $m^{th}$ subchannel, the $m^{th}$ subchannel is used to transmit a $m^{th}$ coded segment, and the $m^{th}$ coded segment is generated after the $m^{th}$ piece of information is encoded.

According to a third aspect, a data frame receiving method is provided, executed in a communication system in which a channel is divided into N subchannels, and N≥2. The method includes: A receive device receives a data frame through K subchannels in the N subchannels, and N≥K≥2; and decodes, based on information corresponding to an interleaver of each subchannel of the K subchannels and a first decoder, a coded segment carried on each subchannel of at least two subchannels, to obtain first information, where the first information includes a portion or all of information corresponding to a preamble field in the data frame; a coded segment carried on a $k^{th}$ subchannel in the K subchannels is generated after the first information is interleaved by a $k^{th}$ interleaver and encoded by a first encoder; or a coded segment carried on a $k^{th}$ subchannel in the K subchannels is generated after the first information is encoded by a first encoder; the $k^{th}$ interleaver is an interleaver corresponding to the $k^{th}$ subchannel, and the first decoder corresponds to the first encoder; the first encoder includes a 1/2 convolutional encoder or a recursive systematic convolutional encoder; and k∈[1, K].

According to the solution provided in this application, after to-be-sent target information is separately interleaved at a transmit end by using a plurality of interleavers, the interleaved information is further encoded, and the encoded information is separately sent through a plurality of subchannels, a receive end can restore the target information based on information on any two channels in the plurality of channels and information about an interleaver corresponding to the two channels. This improves flexibility of puncturing the plurality of channels and communication robustness.

Optionally, the decoding, based on information corresponding to an interleaver of each subchannel of the K subchannels and a first decoder includes:

setting a log-likelihood ratio of coded segments carried on subchannels other than the K subchannels in the N subchannels to zero.

Optionally, the first decoder includes a Viterbi decoder.

Optionally, the method further includes: determining, according to a first mapping relationship, information corresponding to an interleaver of each subchannel of the K subchannels, where the first mapping relationship includes information corresponding to an interleaver on each subchannel of the N subchannels.

According to a fourth aspect, a data frame receiving method is provided, executed in a communication system in which a channel is divided into N subchannels, and $N \geq 2$. The method includes: precoding first information by using a precoding matrix, to generate a first information matrix, where the first information matrix includes N rows, the precoding matrix includes N rows, the N rows of the precoding matrix one-to-one correspond to the N subchannels, any T rows of the precoding matrix are linearly independent of each other, and $T \geq 2$; encoding each row of the first information matrix by using a first encoder, to generate N coded segments, where an nth coded segment in the N coded segments is generated after an nth row of the first information matrix is encoded, and $n \in [1, N]$; generating a data frame, where the data frame includes the N coded segments, the N coded segments one-to-one correspond to the N subchannels, and each subchannel carries a corresponding coded segment; and sending the data frame through at least two subchannels of the 2N subchannels.

According to the solution provided in this application, after to-be-sent target information is separately precoded at a transmit end based on the precoding matrix, the precoded information is further encoded, and the encoded information is separately sent through a plurality of subchannels, a receive end can restore the target information based on information on any two channels in the plurality of channels and information about the precoding matrix. This improves flexibility of puncturing the plurality of channels and communication robustness.

Optionally, the precoding first information by using a precoding matrix includes: dividing the first information into T information segments; generating a second information matrix based on the T information segments, where the second information matrix includes T rows, and each row corresponds to one information segment; and multiplying the precoding matrix by the second information matrix, to obtain the first information matrix, where the precoding matrix includes T columns.

Optionally, each element in the second information matrix corresponds to a number on a first finite field, and magnitude of the first finite field is 2q; each element in $t^{th}$ row in the second information matrix corresponds to q bits of a $t^{th}$ information segment in the T information segments; the $t^{th}$ row corresponds to the $t^{th}$ information segment, and $t \in [1, T]$; each element in the second information matrix is obtained by converting the corresponding q bits; and any T rows of the precoding matrix are linearly independent of each other in the first finite field.

Optionally, when q=2 and T=2, the precoding matrix includes all or a portion of rows of a P matrix below:

$$P = \begin{bmatrix} 1 & 0 \\ 0 & 1 \\ 1 & 1 \\ 1 & 2 \\ 1 & 3 \end{bmatrix}.$$

Optionally, before the encoding each row of the first information matrix by using a first encoder, the method further includes: adding a parity check bit to each row of the first information matrix.

Optionally, a transmit device stores a first mapping relationship, and the first mapping relationship indicates a one-to-one correspondence between the N rows in the precoding matrix and the N subchannels.

According to a fifth aspect, a data frame sending method is provided, executed in a communication system in which a channel is divided into N subchannels, and $N \geq 2$. The method includes: A receive device receives a data frame through K subchannels in the N subchannels, and $N \geq K \geq 2$; and decodes, based on a first decoder and a row of a precoding matrix corresponding to each subchannel of the K subchannels, a coded segment carried on each of at least two subchannels, to obtain first information, where the first information includes a portion or all of information corresponding to a preamble field in the data frame; a coded segment carried on a $k^{th}$ subchannel in the K subchannels is generated after an element in a $k^{th}$ row in a first information matrix is encoded by using a first encoder; the first information matrix is generated after the first information is precoded by using the precoding matrix; any T rows of the precoding matrix are linearly independent of each other, and T≥2; and the first decoder corresponds to the first encoder.

Optionally, when q=2 and T=2, the precoding matrix includes a portion or all rows of a P matrix below:

$$P = \begin{bmatrix} 1 & 0 \\ 0 & 1 \\ 1 & 1 \\ 1 & 2 \\ 1 & 3 \end{bmatrix}.$$

Optionally, the method further includes: determining, according to a first mapping relationship, a row of a precoding matrix corresponding to each subchannel of the K subchannels, where the first mapping relationship indicates a one-to-one correspondence between N rows in the precoding matrix and the N subchannels.

According to a sixth aspect, a data frame sending method is provided, executed in a communication system in which a channel is divided into N subchannels, and N≥2. The method includes: A transmit device divides first information, to generate a first coded segment and a second coded segment; processes the first coded segment and the second coded segment based on M interleaver groups, to obtain M coded segments, where the M coded segments one-to-one correspond to the M interleaver groups, and each coded segment is obtained based on a corresponding interleaver group; each interleaver group includes two interleavers; a $m^{th}$ coded segment in the M coded segments is obtained after an $m\_1^{th}$ sequence is added to a $m\_2^{th}$ sequence, the $m\_1^{th}$ sequence is obtained after the first coded segment is interleaved by using one interleaver in a $m^{th}$ interleaver group in the M interleaver groups, and the $m\_2^{th}$ sequence is obtained after the second coded segment is interleaved by another interleaver in the $m^{th}$ interleaver group; the $m^{th}$ coded segment corresponds to the $m^{th}$ interleaver group; m∈[3, M+2], and M≥1; generates a data frame, where the data frame includes N coded segments, the N coded segments one-to-one correspond to the N subchannels, each subchannel carries a corresponding coded segment, and the N coded segments include all or a portion of the first coded segment, the second coded segment, and the M coded segments; and sends the data frame through at least two subchannels of the N subchannels.

According to the solution provided in this application, after to-be-sent target information is separately processed at a transmit end based on the interleaver group, the processed information is further processed, and the encoded information is separately sent through a plurality of subchannels, a receive end can restore the target information based on information on any two channels in the plurality of channels and the interleaver group corresponding to the channels. This improves flexibility of puncturing the plurality of channels and communication robustness.

Optionally, M=2.

Specifically, in an implementation, a size of one coded segment corresponds to one 20 MHz subchannel. To be specific, when M=2, four coded segments are generated according to the solution provided in this application. The four coded segments separately correspond to four subchannels in an 80 Hz bandwidth (a bandwidth of each subchannel is 20 MHz).

In this case, when a bandwidth of a channel used in the communication system provided in this application is 80 MHz, a value of N is 4. Therefore, when M=2, the four coded segments are generated according to the solution provided in this application, and each coded segment corresponds to one subchannel.

When the bandwidth of the channel used in the communication system provided in this application is 160 MHz, the value of N may be 8. Therefore, when M=2, the four coded segments are first generated according to the solution provided in this application, and each coded segment corresponds to one subchannel in an 80 MHz bandwidth. The 80 MHz bandwidth includes the four subchannels (the bandwidth of each subchannel is 20 MHz). Then, the four coded segments corresponding to the 80 MHz bandwidth may be replicated, and the four replicated coded segments are respectively carried on the four subchannels in another 80 MHz bandwidth of the 160 MHz channel.

By analogy, when the bandwidth of the channel used in the communication system provided in this application is Qx80 MHz, the value of N may be Qx4. Therefore, when M=2, the four coded segments are first generated according to the solution provided in this application, and each coded segment corresponds to one subchannel in the 80 MHz bandwidth. The 80 MHz bandwidth includes the four subchannels (the bandwidth of each subchannel is 20 MHz). Then, the four coded segments corresponding to the 80 MHz bandwidth may be replicated Q times, and the Qx4 replicated coded segments are respectively carried on four (Q-1) subchannels in another bandwidth of (Q-1)x80 MHz of the 160 MHz channel.

Optionally, M=N-2.

Specifically, in an implementation, the size of the coded segment corresponds to the 20 MHz subchannel. To be specific, when M=N-2, and

the bandwidth of the channel used in the communication system provided in this application is 80 MHz, the value of N may be 4. When M=N-2 (the value is 2 in this case), the four coded segments are generated according to the solution provided in this application, and each coded segment corresponds to one subchannel.

When the bandwidth of the channel used in the communication system provided in this application is 160 MHz, the value of N is 8. When M=N-2 (the value is 6 in this case), eight coded segments are generated according to the solution provided in this application, and each coded segment corresponds to one subchannel.

By analogy, when the bandwidth of the channel used in the communication system provided in this application is Qx80 MHz, the value of N may be Qx4. When M=N-2 (the value is Qx4-2 in this case), Qx4 coded segments are generated according to the solution provided in this application, and each coded segment corresponds to one subchannel.

Optionally, the $m\_1^{th}$ sequence is the same as that of the first coded segment, and the $m\_2^{th}$ sequence is a sequence formed after a bit in the second coded segment is cyclically shifted by at least one bit (for example, m bits).

Therefore, the interleaver group in this application can be easily implemented.

Optionally, the method further includes: determining the M interleaver groups according to a first mapping relationship, where the first mapping relationship includes information corresponding to an interleaver group of each subchannel of the N subchannels, a $m^{th}$ interleaver is an interleaver corresponding to a $m^{th}$ subchannel; and the $m^{th}$ subchannel is used to transmit the $m^{th}$ coded segment.

According to a seventh aspect, a data frame receiving method is provided, executed in a communication system in which a channel is divided into N subchannels, and N≥2. The method includes: A receive device receives a data frame through K subchannels in the N subchannels, and N≥K≥2; and decodes, based on a first decoder and information corresponding to an interleaver group of each subchannel of the K subchannels, a coded segment carried on each subchannel of at least two subchannels, to obtain first information, where the first information includes a portion or all of information corresponding to a preamble field in the data frame; a $k^{th}$ coded segment carried on a $k^{th}$ subchannel in the K subchannels is a first coded segment or a second coded segment obtained after the first information is divided, or a $k^{th}$ coded segment is obtained after a first coded segment and a second coded segment are processed by using a $k^{th}$ interleaver group corresponding to the $k^{th}$ subchannel; each interleaver group includes two interleavers; the $k^{th}$ coded segment is obtained after a $k\_1^{th}$ sequence is added to a $k\_2^{th}$ sequence; and the $k\_1^{th}$ sequence is obtained after the first coded segment is interleaved by one interleaver in the $k^{th}$ interleaver group, the $k\_2^{th}$ sequence is obtained after the second coded segment is interleaved by another interleaver in the $k^{th}$ interleaver group, and $k \in [1, K]$.

Optionally, the $k\_1^{th}$ sequence is the same as that of the first coded segment, and the $k\_2^{th}$ sequence is a sequence formed after a bit in the second coded segment is cyclically shifted by at least one bit (for example, k bits).

Optionally, the method further includes: determining, according to a first mapping relationship, the information corresponding to the interleaver group of each subchannel of the K subchannels, where the first mapping relationship includes information corresponding to an interleaver group of each subchannel of the N subchannels.

According to an eighth aspect, a communication apparatus is provided. The communication apparatus includes modules or units configured to perform the method according to any one of the first aspect to the seventh aspect and the possible implementations of the first aspect to the seventh aspect.

According to a ninth aspect, a communication device is provided. The communication apparatus includes a processor. The processor is coupled to a memory, to perform the method according to any one of the first aspect to the seventh aspect and the possible implementations of the first aspect to the seventh aspect. Optionally, the communication device further includes the memory. Optionally, the communication device further includes a communication interface, and the processor is coupled to the communication interface. In an implementation, the communication device is a device. In this case, the communication interface may be a transceiver or an input/output interface. In another implementation, the communication device may be a chip or a chip system. In this case, the communication interface may be an input/output interface, an interface circuit, an output circuit, an input circuit, a pin, a related circuit, or the like on the chip or the chip system. The processor may alternatively be embodied as a processing circuit or a logic circuit.

According to a tenth aspect, a communication apparatus is provided. The communication apparatus includes an input circuit, an output circuit, and a processing circuit. The processing circuit is configured to receive a signal through the input circuit, and transmit a signal through the output circuit, to perform the method according to any one of the first aspect to the seventh aspect and the possible implementations of the first aspect to the seventh aspect.

In a specific implementation process, the communication apparatus may be a coded segment, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be different circuits, or a same circuit. In this case, the circuit is used as the input circuit and the output circuit at different moments. Specific implementations of the processor and the circuits are not limited in embodiments of this application.

According to an eleventh aspect, a processing apparatus is provided, including a processor and a memory. The processor is configured to read instructions stored in the memory, receive a signal through a receiver, and transmit a signal through a transmitter, to perform the method according to any one of the first aspect to the seventh aspect and the possible implementations of the first aspect to the seventh aspect.

Optionally, there are one or more processors and one or more memories.

Optionally, the memory may be integrated into the processor, or the memory and the processor may be separately disposed.

In a specific implementation process, the memory may be a non-transitory (non-transitory) memory, for example, a read-only memory (read only memory, ROM). The memory and the processor may be integrated into a same coded segment, or may be disposed on different coded segments. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may come from a receiver. The transmitter and the receiver may be collectively referred to as a transceiver.

The processor according to the eleventh aspect may be a coded segment. The processor may be implemented by using hardware or software. When the processor is implemented by using hardware, the processor may be a logic circuit, an integrated circuit, or the like; or when the processor is implemented by using software, the processor may be a general-purpose processor, and is implemented by reading software code stored in the memory. The memory may be integrated into the processor, or may exist independently outside the processor.

According to a twelfth aspect, a processing apparatus is provided. The processing apparatus includes a communication interface and a processing circuit. The communication interface is configured to send a transmission frame according to the method in any one of the first aspect, the second aspect, the fourth aspect, or the sixth aspect and the possible implementations of the first aspect, the second aspect, the fourth aspect, or the sixth aspect. The processing circuit is configured to generate the transmission frame.

According to a thirteenth aspect, a processing apparatus is provided. The processing apparatus includes a communication interface and a processing circuit. The communication interface is configured to obtain a to-be-processed transmission frame. The processing circuit is configured to process the to-be-processed transmission frame according to the method in any one of the third aspect, the fifth aspect, or the seventh aspect and the possible implementations of the third aspect, the fifth aspect, or the seventh

According to a fourteenth aspect, a computer program product is provided. The computer program product includes a computer program (which may also be referred to as code or instructions). When the computer program is run, a computer is enabled to perform the method according to any one of the first aspect to the seventh aspect and the possible implementations of the first aspect to the seventh aspect.

According to a fifteenth aspect, a computer-readable medium is provided. The computer-readable medium stores a computer program (which may also be referred to as code or instructions). When the computer program is run on a computer, the computer is enabled to perform the method according to any one of the first aspect to the seventh aspect and the possible implementations of the first aspect to the seventh aspect.

According to a sixteenth aspect, a communication system is provided. The communication system includes the foregoing transmit device and the receive device.

## BRIEF DESCRIPTION OF DRAWINGS

FIG. 1 is a schematic diagram of an example of a puncturing scheme;
FIG. 2 is a schematic diagram of an example of a content channel;
FIG. 3 is a schematic diagram of an example of a communication system according to this application;
FIG. 4 is an example of a channel allocation manner according to this application;
FIG. 5 is a schematic diagram of an example of a data frame according to this application;
FIG. 6 is a schematic diagram of an example of a structure of HE-SIG-B according to this application;
FIG. 7 is a schematic diagram of an example of a coded segment generation manner according to this application;
FIG. 8 is a schematic diagram of an example of a decoding process corresponding to the coded segment generation manner shown in FIG. 7;

FIG. 9 is a schematic diagram of another example of a data frame according to this application;

FIG. 10 is a schematic diagram of an example of a decoding process corresponding to the coded segment generation manner shown in FIG. 9;

FIG. 11 is a schematic diagram of another example of a coded segment generation manner according to this application;

FIG. 12 is a schematic diagram of still another example of a coded segment generation manner according to this application;

FIG. 13 is a schematic diagram of an example of a decoding process corresponding to the coded segment generation manners shown in FIG. 11 and FIG. 12;

FIG. 14 is a schematic diagram of another example of a coded segment generation manner according to this application;

FIG. 15 is a schematic diagram of still another example of a coded segment generation manner according to this application;

FIG. 16 is a schematic diagram of an example of a communication apparatus according to this application;

FIG. 17 is a schematic diagram of another example of a communication apparatus according to this application;

FIG. 18 is a schematic diagram of still another example of a communication apparatus according to this application;

FIG. 19 is a schematic diagram of an example of an AP according to this application; and

FIG. 20 is a schematic diagram of an example of a STA according to this application.

## DESCRIPTION OF EMBODIMENTS

The following describes the technical solutions of this application with reference to the accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5$^{th}$ generation (5th generation, 5G) system, or a new radio (new radio, NR) system.

The following is used as an example for description. Only the WLAN system is used as an example below to describe an application scenario in the embodiments of this application and a method in the embodiments of this application.

Specifically, embodiments of this application may be applied to a WLAN system, and the embodiments of this application may be applied to any protocol in the institute of electrical and electronics engineers (institute of electrical and electronics engineers, IEEE) 802.11 series protocols currently used in the WLAN.

The WLAN may include one or more basic service sets (basic service set, BSS). A network node in the basic service sets includes an access point (access point, AP) and a station (station, STA). One STA can access only one AP (in other words, the STA is associated with the AP), while one AP can be associated with a plurality of STAs. Before performing data transmission, the STA and the AP need to perform beam training to obtain an optimal receive beam and/or an optimal transmit beam between the STA and the AP. Based on the original BSS, the IEEE 802. 11ad introduces a personal basic service set (personal basic service set, PBSS) and a personal basic service set control point (PBSS control point, PCP). Each personal basic service set may include a PCP/AP and a plurality of stations associated with the PCP/AP.

A subscriber station (STA) in the WLAN may also be referred to as a system, a subscriber unit, an access terminal, a mobile station, a remote station, a remote terminal, a mobile device, a user terminal, a terminal, a wireless communication device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a wearable device, a computing device, or another processing device connected to a wireless modem.

The PCP/AP in the WLAN may be configured to communicate with the STA by using the wireless local area network, and transmit data of the STA to a network side or transmit data from the network side to the STA.

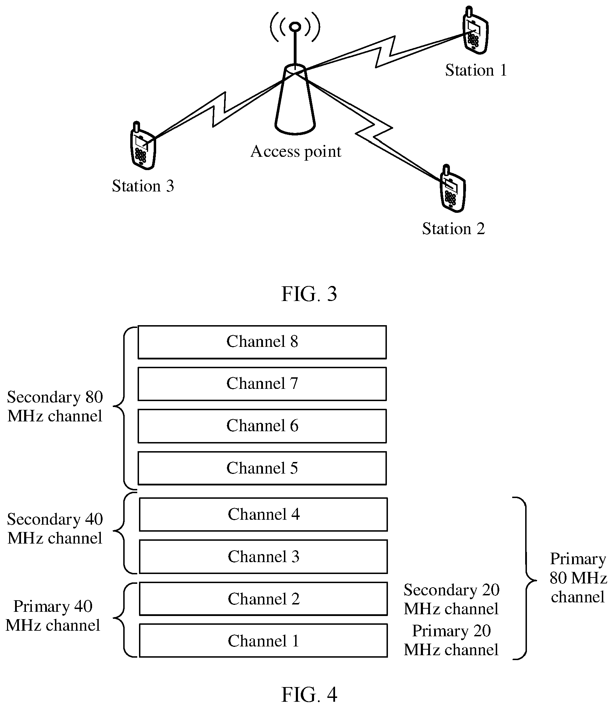

For ease of understanding embodiments of this application, the following first uses the communication system shown in FIG. 3 as an example to describe in detail a communication system applicable to embodiments of this application. A scenario system shown in FIG. 1 may be a WLAN system. The WLAN system shown in FIG. 3 may include one or more APs and one or more STAs. FIG. 3 uses one AP and three STAs as an example. Wireless communication may be performed between the AP and the STA according to various standards. For example, wireless communication between the AP and the STA may be performed by using a single-user multiple-input multiple-output (single-user multiple-input multiple-output, SU-MIMO) technology or a multi-users multiple-input multiple-output (multi-users multiple-input multiple-output, MU-MIMO) technology.

The AP is also referred to as a wireless access point, a hotspot, or the like. The AP is an access point for a mobile user to access a wired network, and is mainly deployed in homes, buildings, and campuses, or is deployed outdoors. The AP is equivalent to a bridge that connects the wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) coded segment. Optionally, the AP may be a device that supports a plurality of WLAN standards such as 802.11.

From 802.11a/g to 802.11n and 802.11ac, and 802.11ax and 802.11be that are under discussion, allowed transmission bandwidth and supported maximum transmission rates of the WLAN are shown in the following Table 1.

**Table 1**

|  | 802.11a/g | 802.11n | 802.11ac | 802.11ax | 802.11be |
|---|---|---|---|---|---|
| Bandwidth | 20 MHz | 20/40 MHz | 20/40/80/160 MHz | 20/40/80/160 MHz | 20/40/80/160/240 MHz/320 MHz |
| Supported maximum data rate | 54 Mbps | 600 Mbps | 6.9 Gbps | 9.6 Gbps | Not lower than 30 Gbps |

FIG. 4 is an example of a channel allocation manner according to this application. As shown in FIG. 2, an entire channel is divided into a primary 20 MHz channel (primary channel, primary 20 MHz, or P20 for short), a secondary 20 MHz channel (secondary 20 MHz, S20), a secondary 40 MHz channel (S40), and a secondary 80 MHz (S80) channel. In addition, there is corresponding P40 and P80. When a bandwidth is increased, a data transmission rate is also increased. Therefore, a larger bandwidth (for example, 240 MHz or 320 MHz) greater than 160 MHz may be considered in a next-generation standard.

To improve spectrum utilization, for example, orthogonal frequency division multiplexing (Orthogonal frequency division multiplexing, OFDM) may be used to implement simultaneous multi-user transmission.

OFDM is a multi-carrier transmission technology, which uses a large quantity of adjacent orthogonal subcarriers (orthogonal subcarrier). Each subcarrier is modulated by using a conventional modulation technology, so that the technology supports high-rate transmission, and can effectively resist frequency selective fading (frequency selective fading). Therefore, many wireless transmission protocols use the orthogonal frequency division multiplexing.

A data frame (or a transmission frame) used in the multi-user transmission technology may be illustrated, for example, a frame structure such as a physical layer protocol data unit (PHY Protocol Data Unit, PPDU) or a high efficient multiple user (High Efficient Multiple User, HE MU) PPDU.

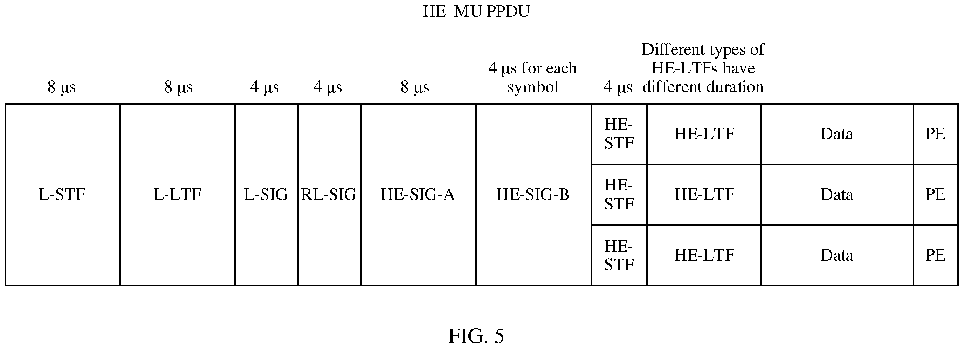

FIG. 5 shows an example of a data frame (for example, HE MU PPDU) in this application. As shown in FIG. 5, a legacy short training field (legacy short training field, L-STF) includes 10 repeated parts. A receive end detects the PPDU, and obtains (or corrects) (correction) frequency and time by using a repetition feature.

The "legacy short training sequence" may also be referred to as a legacy short training field. In addition, in this application, the "field" may also be referred to as a domain or a part. Descriptions of same or similar cases are not described below.

A legacy long training field (legacy long training field, L-LTF) includes two 3.2 μs repeated parts and one 1.6 μs guard interval. The receive end may further obtain (correct) the frequency and the time by using the L-LTF, and perform channel estimation, for example, estimate a signal to noise ratio (SIGNAL NOISE RATIO, SNR).

A legacy signal field (legacy signal field, L-SIG) carries information about a rate and a length, and indicates duration of the PPDU. For a legacy station, transmission needs to be delayed by at least duration of the PPDU, to prevent interference. In addition, an L-SIG in a non-HE part may be decoded by both an HE station and the legacy station, and corresponding information may be obtained, to ensure backward compatibility.

A repeat legacy signal field (repeat legacy signal field, RL-SIG) is a replicated L-SIG symbol, and therefore has all features of the L-SIG. There are the following advantages of copying the L-SIG:

1. Reliability is enhanced. If a symbol is replicated, the receive end performs maximal ratio combining (maximal ratio combining, MRC), so that an equivalent SNR can be increased by 3 dB, to enhance reliability of an HE PPDU. This is especially applicable to an outdoor scenario. The MRC is a receiving technology that uses an algorithm at the receive end to improve quality of a signal at the receive end.
2. An automatic detection function is provided to distinguish the HE PPDU from another PPDU. The receive end detects whether the L-SIG is similar to a next symbol, and uses a detection result as one of bases for identifying whether the received PPDU is the HE PPDU.

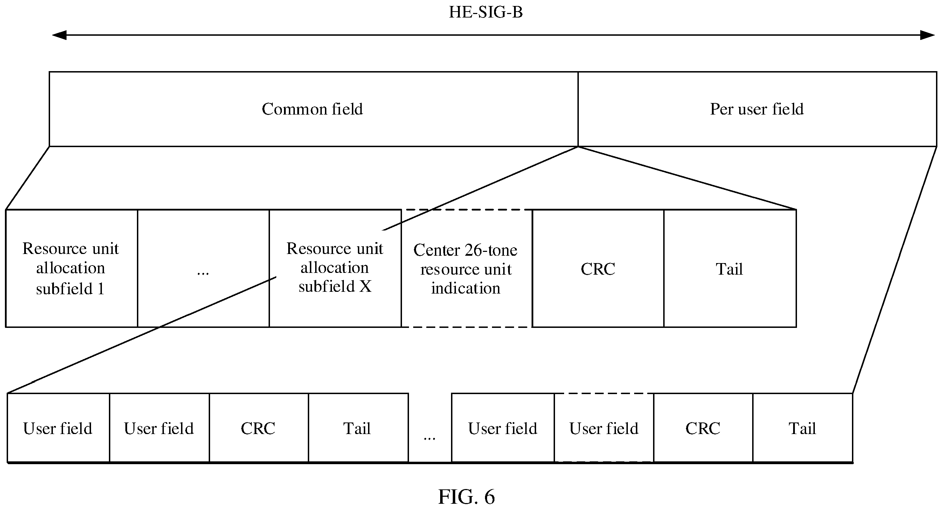

Information carried in a high efficient signal field A (high efficient signal field A, HE-SIG-A) may be used to parse the HE PPDU. The HE-SIG-A in the HE MU PPDU includes an indication related to a high efficient signal field A (high efficient signal field A, HE SIG-B), for example, a quantity of symbols of the HE SIG-B or a quantity of multi-users multiple-input multiple-output (multi-users multiple-input multiple-output, MU-MIMO) users, a coding and modulation scheme of the HE SIG-B, and compression of the HE SIG-B (indicating whether to compress). For a specific structure, refer to FIG. 6. A modulation and coding parameter corresponding to the data part is separately indicated for different users in the HE-SIG-B.

The HE-SIG-B provides resource allocation information for OFDMA and the MU-MIMO.

FIG. 6 is an example of a structure of the HE-SIG-B carried on a 20 MHz subchannel. As shown in FIG. 6, the entire HE-SIG-B is divided into two parts.

1. Common field: A common field includes 1 to X resource unit allocation subfields, a center 26-tone resource unit indication field that exists when a bandwidth is greater than or equal to 80 MHz, a cyclic redundancy check (cyclic redundancy check, CRC) subfield used for check, and a tail subfield used for cyclic decoding. X herein is related to the bandwidth. When the bandwidth is 20 MHz or 40 MHz, X=1. When the bandwidth is 80 MHz, X=2. When the bandwidth is 160 MHz, X=4.

2. Per user field: There are 1 to Y user fields based on a sequence of allocating resource units. Generally, one group includes two user fields (except the last group). Every two user fields are followed by one CRC field and one tail field. The last group of user fields may include one or two user fields, one CRC field, and one tail field.

The method provided in this application may be used to transmit information in one or more fields in the data frame, for example, information in the HE SIG-B.

For ease of understanding and description, the following uses a transmission process of information corresponding to the HE SIG-B (or information that needs to be carried in the HE SIG-B) as an example to describe in detail a communication process in this application.

Implementation 1

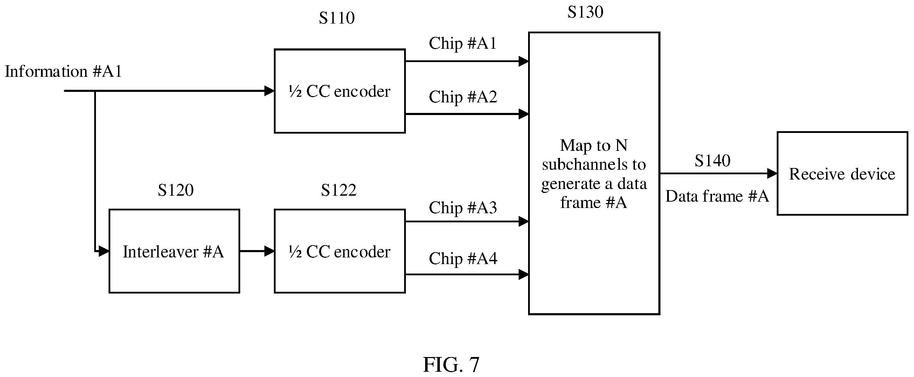

FIG. 7 is a schematic diagram of an example of a process of encoding and sending information #A1 by a transmit device (denoted as a device #A1) according to implementation 1. By way of example and not limitation, the information #A1 may be information corresponding to the HE SIG-B. A process that the device #A1 determines (or generates) the information #A1 may be the same as or similar to that in the conventional technology. To avoid repetition, detailed descriptions thereof are not described herein.

The device #A1 may be an AP, or the device #A1 may be a STA. This is not particularly limited in this application.

In addition, a channel between the device #A1 and a receive device (for example, a device #A2 described below) of a data frame may be divided into N subchannels, and N≥2.

In S110, the device #A1 encodes the information #A1 (that is, an example of first information) by using a 1/2 convolutional code encoder (Convolutional Code Encoder, CC encoder), to generate coded segments #A1 and #A2.

For example, the device #A1 may add W bits (that is, tail bits) to the information #A1 and input the W bits into the 1/2 convolutional code encoder. One of two output coded segments (that is, the coded segments #A1 and #A2) includes bits generated based on a convolutional coefficient by using the 1/2 convolutional code encoder. The other coded segment includes bits generated based on the other convolutional coefficient by using the 1/2 convolutional code encoder. In this application, lengths of the coded segments #A1 and #A2 are the same, and the lengths of the coded segments #A1 and #A2 are the same as those of the information #A1.

In this application, a quantity of W corresponds to (for example, the same as) that of shift registers used in the 1/2 convolutional code encoder.

It should be noted that, a process of encoding information by the 1/2 convolutional code encoder in this application may also be the same as or similar to that in the conventional technology.

In this application, the lengths of the coded segments #A1 and #A2 may correspond to that of a 20 MHz subchannel. To be specific, in this application, a size of one coded segment can be transmitted on one 20 MHz subchannel.

In S120, the device #A1 interleaves the information #A1 by using an interleaver #A, to generate information #A2 (that is, an example of second information).

Interleaving is a technology used for processing data in a communication system. In essence, an interleaver is a device that changes an information structure to the maximum extent without changing content of information.

For example, the interleaver #A may include a regular interleaver.

The regular interleaver may also be referred to as a group interleaver, that is, an interleaver of writing by rows and reading by columns, or writing by columns and reading by rows. For example, a simple 3x3 interleaving matrix may include 32 interleaving manners. However, although many of 32 reading manners are different in form, features represented by the 32 reading manners are completely the same in essence. Therefore, the interleavers can be classified into four types: L represents left, R represents right, T represents up, and B represents down. The four types of interleavers can be expressed as LR/TB, LR/BT, RL/TB, and RLBT. LR indicates writing from left to right, TB indicates reading from up to down, and other representation forms are similar.

For another example, the interleaver #A may include an irregular interleaver.

Most forms of the irregular interleaver are evolved from the foregoing four group interleavers. Currently, the irregular interleaver mainly includes a diagonal interleaver, a helical interleaver, an odd-even interleaver, and the like.

Both the diagonal interleaver and the helical interleaver use a manner of writing by rows and diagonally reading. A difference between the diagonal interleaver and the helical interleaver lies in that the diagonal interleaver writes by rows and then diagonally reads from the first element in the first row, while the helical interleaver diagonally reads from the first element in the last row.

The odd-even interleaver uses a method of adding a restriction by using a puncturing technology when the interleaver is generated. The puncturing technology sends information to a channel in a form of puncturing short code during an encoding and decoding process, and a receive end restores the information by adding analog zeros.

For another example, the interleaver #A may include a random interleaver.

The random interleaver may also be referred to as a pseudo random interleaver, that is, an interleaving manner that has good performance, is generated through random selection in advance and then is stored as a table for reading.

The random performance of the random interleaver mainly depends on aspects such as a manner of generating a random number, a main parameter S of the interleaver, and selection of a value. For example, the random number may be generated by using a linear remainder-based Bes-Ram shuffle technique and randomly sampling a system clock.

By way of example and not limitation, the random interleaver may be enumerated, for example, an S-random interleaver, or a T-random interleaver.

Generation of the random number of the S-random interleaver is similar to that of other interleavers, but there is an additional condition, that is, an information bit whose length of an information sequence is S before interleaving needs to be adjacent and more than S+1 units after interleaving. To be specific, the interleaver has a feature of having the maximum dispersion factor parameter.

The T-random interleaver is a special random interleaver, which requires that a distance between any pair of adjacent information bits in a codeword after interleaving may be greater than a constraint length of the entire code.

The S-T-random interleaver: This interleaver is a combination of two generation conditions of the S-random interleaver and the T-random interleaver.

In S122, the device #A1 encodes the information #A2 by using the 1/2 convolutional code encoder, to generate coded segments #A3 and #A4. In addition, the process is similar to that in the S 110 in which the device #A1 encodes the information #A1 by using the 1/2 convolutional code encoder. To avoid repetition, detailed description thereof is not described herein.

It should be noted that in this application, the S 110 and the S120 may be synchronously performed, or the S110 and the S120 may be asynchronously performed. This is not particularly limited in this application. In addition, when the S110 and the S120 are asynchronously performed, a sequence of the steps is not particularly limited in this application.

In S130, the device #A1 may generate a data frame #A. The data frame #A may include a plurality of the coded segments #A1 to #A4.

For example, when a channel bandwidth is less than 80 MHz, a quantity of subchannels is less than 4, that is, N ≤ 3. In this case, the device #A1 may select N coded segments from the coded segments #A1 to #A4, and the device #A1 may perform interleaving and constellation mapping on each of the N coded segments, to map each coded segment to one subchannel.

For another example, when the channel bandwidth is equal to 80 MHz, the quantity of subchannels is equal to 4, that is, N=4. In this case, the device #A1 may perform interleaving and constellation mapping on each of the N coded segments, to map each coded segment to one subchannel.

For another example, when the channel bandwidth is greater than 80 MHz, a quantity of subchannels is greater than 4, that is, N>4. In this case, the device #A1 may perform interleaving and constellation mapping on each of the coded segments #A1 to #A4, to map each coded segment to four subchannels in an 80 MHz bandwidth. In addition, a portion or all content (or coded segments) in the 80 MHz bandwidth may be repeatedly sent on another bandwidth.

For another example, when the channel bandwidth is equal to 160 MHz, the quantity of subchannels is equal to 8, that is, N=8. In this case, the device #A1 may perform interleaving and constellation mapping on each of the coded segments #A1 to #A4, to map each coded segment to four subchannels in the 80 MHz bandwidth (denoted as bandwidth a1). In addition, content of a bandwidth a1 may be repeatedly sent on another 80 MHz bandwidth.

Similarly, when the channel bandwidth is 240 MHz, same content is sent on three 80 MHzs, and four different coded segments are sent on different 20 MHz of each 80 MHz. Similarly, when the channel bandwidth is 320 MHz, content of 80 MHz may be repeated four times.

For example, in this application, the device #A1 and the device #A2 may further include a mapping relationship #A (that is, an example of a first mapping relationship). The mapping relationship #A indicates information corresponding to an interleaver of each of the plurality of subchannels.

In addition, in this application, the mapping relationship #A may be stipulated by the communication system or a communication protocol. Alternatively, the mapping relationship #A may be negotiated by the device #A1 and the device #A2. This is not particularly limited in this application.

In this application, information corresponding to an interleaver of one subchannel (denoted as a subchannel #A1) may indicate whether a coded segment corresponding to the subchannel #A1 is interleaved (for example, by the interleaver #A). Alternatively, information corresponding to an interleaver of the subchannel #A1 may indicate whether a coded segment corresponding to the subchannel #A1 is generated based on the information #A1 or the information #A2.

In this case, in S130, the device #A1 may map the foregoing generated coded segment to the corresponding subchannel according to the mapping relationship #A.

In S140, the device #A1 may send the data frame #A through at least two channels of N subchannels. For example, the device #A1 may puncture one or more channels of the N subchannels according to a requirement.

In an implementation, when the bandwidth of the channel is less than or equal to 80 MHz, during puncturing, it only needs to be ensured that the coded segments can be sent through at least two subchannels in the 80 MHz bandwidth, in other words, it only needs to be ensured that the at least two subchannels are not punctured.

In another implementation, when the bandwidth of the channel is greater than 80 MHz, during puncturing, at least two subchannels carrying different coded segments are not punctured.

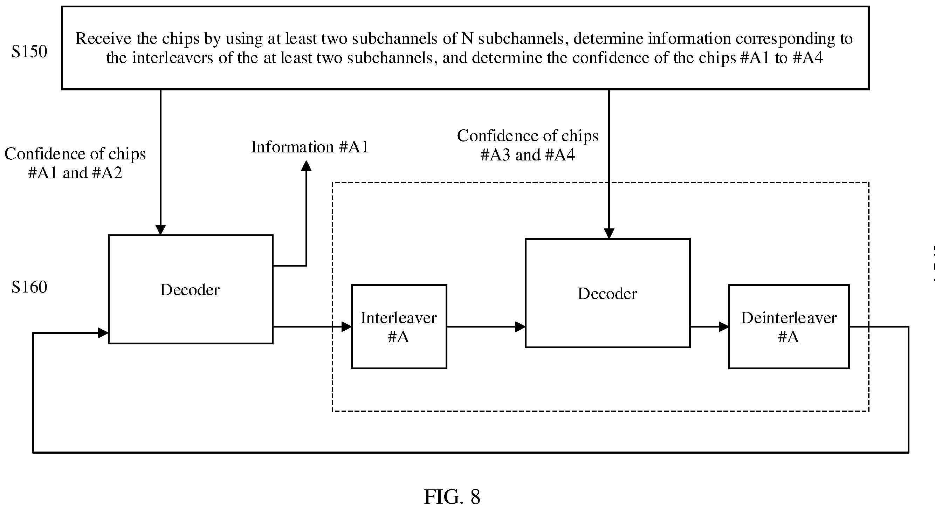

FIG. 8 is a schematic diagram of an example of a decoding process of the receive device (denoted as the device #A2) according to implementation 1.

When the device #A1 is the AP, the device #A2 may be the STA or the AP.

When the device #A1 is the STA, the device #A2 may be the STA or the AP.

In S150, the device #A2 may receive coded segments through the at least two subchannels of the N subchannels.

In addition, the device #A2 may determine information corresponding to an interleaver carrying a coded segment.

For example, it is assumed that the device #A2 receives a coded segment #An through a subchannel #An, the device #A2 may determine, according to the mapping relationship #A, information corresponding to an interleaver of the subchannel #An, that is, whether the coded segment #An is interleaved by the interleaver #A.

For example, if the at least two received coded segments are not interleaved by the interleaver #A, the device #B1 may decode the at least two coded segments by using, for example, a Viterbi (Viterbi) decoder, to restore the information #A1.

For another example, if one of the at least two received coded segments is interleaved by the interleaver #A, and the other coded segment is not interleaved by the interleaver #A, the device #B1 may decode the at least two coded segments through, for example, turbo (turbo) iterative decoding, to restore the information #A1.

In an implementation, the device #A2 determines, based on receiving of coded segments through each subchannel of the N subchannels, demodulation confidence of a coded segment corresponding to each subchannel. The demodulation confidence may also be referred to as confidence, a log likelihood ratio (log likelihood ratio, LLR), or the like. For example, if a subchannel does not carry a coded segment (in other words, the subchannel is punctured), the demodulation confidence of the coded segment corresponding to the subchannel is set to zero.

It should be noted that, when the bandwidth of the channel is greater than 80 MHz, as described above, a coded segment is repeatedly sent at an interval of 80 MHz bandwidth, and therefore a same coded segment may be received through a plurality of subchannels. In this case, confidence of the coded segment may be determined based on confidence of any one of the plurality of subchannels, or confidence of the coded segment may be determined based on an average value of confidence of subchannels in the plurality of subchannels.

As shown in FIG. 8, in S160, the device #A2 may input the confidence of the determined coded segments #A1 and #A2 to, for example, the Viterbi decoder to obtain an output result #A1, interleave the output result #A1 based on the interleaver #A to obtain an output result #A2, input the confidence of the determined coded segments #A1 and #A2 and the output result #A2 to the Viterbi decoder to obtain an output result #A3, input the output result #A3 and the confidence of the determined coded segments #A1 and #A2 to the Viterbi decoder, and use the output result as the decoding result to restore the information #A1.

Implementation 2

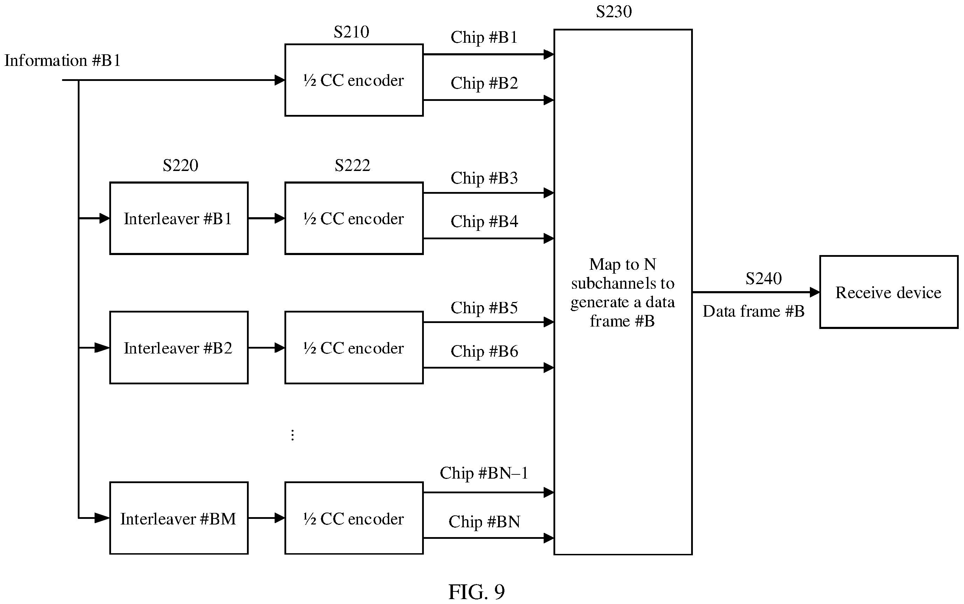

FIG. 9 is a schematic diagram of an example of a process of encoding and sending information #B1 by the transmit device (denoted as the device #B 1) according to implementation 2. By way of example and not limitation, the information #B1 may be information corresponding to the HE SIG-B. A process that the device #B1 determines (or generates) the information #B1 may be the same as or similar to that in the conventional technology. To avoid repetition, detailed descriptions thereof are not described herein.

The device #B1 may be the AP, or the device #B1 may be the STA. This is not particularly limited in this application.

In addition, a channel between the device #B1 and the receive device (for example, a device #B2 described below) of the data frame may be divided into N subchannels, and N≥2.

In S210, the device #B1 encodes the information #B1 by using the 1/2 convolutional code encoder (that is, an example of the first information), to generate coded segments #B1 and #B2.

The process is similar to that in the S110. To avoid repetition, detailed description thereof is not described herein.

In S220, the device #B1 separately interleaves the information #B1 by using M interleavers (denoted as interleavers #B1 to #BM), to generate M pieces of information (denoted as information #B2 to #BM, that is, an example of the second information), where $M = \lceil N/2 \rceil - 1$, and "$\lceil \ \rceil$" represents a round-up operation.

It should be noted that in this application, the M interleavers are different. Alternatively, any two pieces of information (specifically, bit sequences of the information) in the information #B2 to #BM+1 are different.

In S222, the device #B1 encodes the information #B2 by using the 1/2 convolutional code encoder, to generate coded segments #B3 and #B4. The device #B1 encodes information #B3 by using the 1/2 convolutional code encoder, to generate a coded segment #B5 and a coded segment #B6, and by analogy, the device #B1 encodes information #BM by using the 1/2 convolutional code encoder, to generate a coded segment #B2M+1 and a coded segment #B2(M+1).

In addition, because $M = \lceil N/2 \rceil - 1$, when N is an even number, the device #B1 encodes the information #BM+1 by using the 1/2 convolutional code encoder, to generate a coded segment #BN-1 and a coded segment #BN.

When N is an odd number, the device #B1 encodes the information #BM+1 by using the 1/2 convolutional code encoder, to generate a coded segment #BN and a coded segment #BN+1.

The process is similar to that in the S210 in which the device #B1 encodes the information #B1 by using the 1/2 convolutional code encoder. To avoid repetition, detailed description thereof is not described herein.

It should be noted that in this application, the S210 and the S220 may be synchronously performed, or the S210 and the S220 may be asynchronously performed. This is not particularly limited in this application. In addition, when the S210 and the S220 are asynchronously performed, a sequence of the steps is not particularly limited in this application.

In S230, the device #B 1 may generate a data frame #B. The data frame #B may include N coded segments in the coded segments #B1 and #B2(M+1).

For another example, the device #B1 may perform interleaving and constellation mapping on each of the N coded segments, to map each coded segment to one subchannel.

For example, in this application, the device #B1 and the device #B2 may further include a mapping relationship #B (that is, an example of the first mapping relationship). The mapping relationship #B indicates information corresponding to an interleaver of each of the plurality of subchannels.

In addition, in this application, the mapping relationship #B may be stipulated by the communication system or a communication protocol. Alternatively, the mapping relationship #B may be negotiated by the device #B 1 and the device #B2. This is not particularly limited in this application.

In this application, information corresponding to an interleaver of one subchannel (for example, a subchannel #B1) may indicate whether a coded segment corresponding to the subchannel #B1 is interleaved (for example, by one interleaver in the interleavers #B1 to #BM). Alternatively, information corresponding to an interleaver of the subchannel #B1 may indicate whether a coded segment corresponding to the subchannel #B1 is generated based on the information #B1 or the information #B2 to #BM+1.

In this case, when the information corresponding to the interleaver of the subchannel #B1 indicates that the coded segment carried on the subchannel #B1 is an interleavered coded segment, the information corresponding to the interleaver of the subchannel #B1 further indicates that the coded segment corresponding to the subchannel #B1 is specifically processed by the interleaver in the interleavers #B1 to #BM. Alternatively, the information corresponding to the interleaver of the subchannel #B1 further indicates the interleaver corresponding to the subchannel #B1.

In this case, in S330, the device #B1 may map the foregoing generated coded segment to the corresponding subchannel according to the mapping relationship #B.

In S340, the device #B 1 may send the data frame #B through the at least two channels of N subchannels. For example, the device #B1 may puncture one or more channels of the N subchannels according to a requirement.

During puncturing, it only needs to be ensured that the coded segments can be sent by using the at least two subchannels, in other words, it only needs to be ensured that the at least two subchannels are not punctured.

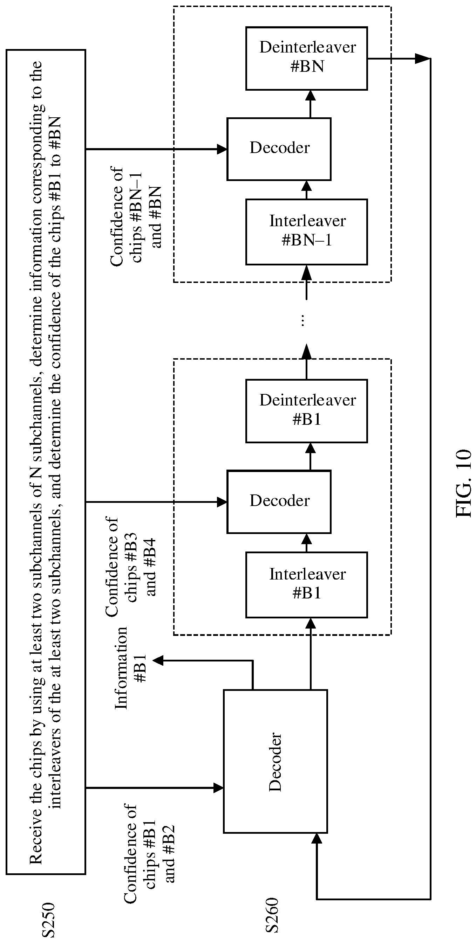

FIG. 10 is a schematic diagram of an example of a decoding process of the receive device (denoted as the device #B2) according to implementation 2.

When the device #B 1 is the AP, the device #B2 may be the STA or the AP.

When the device #B1 is the STA, the device #B2 may be the STA or the AP.

In S250, the device #B2 may receive the coded segment through the at least two subchannels of the N subchannels.

In addition, the device #B2 may determine information corresponding to the interleaver carrying the coded segment.

For example, it is assumed that the device #B2 receives a coded segment #Bn through a subchannel #Bn, the device #B2 may determine, according to the mapping relationship #B, information corresponding to an interleaver of the subchannel #Bn, that is, whether the coded segment #Bn is interleaved by an interleaver #B.

For example, if the at least two received coded segments are not interleaved by the interleaver #B, the device #B 1 may decode the at least two coded segments by using, for example, the Viterbi (Viterbi) decoder, to restore the information #B1.

For another example, if one of the at least two received coded segments is interleaved by the interleaver #B, and the other coded segment is not interleaved by the interleaver #B, the device #B1 may decode the at least two coded segments through, for example, the (turbo) iterative decoding, to restore the information #B1.

In an implementation, the device #B2 determines, based on receiving of coded segments through each subchannel of the N subchannels, demodulation confidence of a coded segment corresponding to each subchannel. The demodulation confidence may also be referred to as confidence, a log likelihood ratio (log likelihood ratio, LLR), or the like. For example, if a subchannel does not carry a coded segment (in other words, the subchannel is punctured), the demodulation confidence of the coded segment corresponding to the subchannel is set to zero.

As shown in FIG. 10, in S260, the device #B2 may input the confidence of the determined coded segments #B1 and #B2 to, for example, the Viterbi decoder to obtain an output result #B1, interleave the output result #B1 based on the interleaver #B1 to obtain an output result #B2, input the confidence of the determined coded segments #B1 and #B2 and the output result #B2 to the Viterbi decoder to obtain an output result #B3, interleave the output result #B3 based on the interleaver #B2 to obtain an output result #B4, input the confidence of the determined coded segments #B3 and #B4 and the output result #B4 in the Viterbi decoder to obtain an output result #B6. By analogy, the device #B2 interleaves an input decoding result based on an interleaver corresponding to a coded segment of each subchannel (or each subchannel), inputs an interleaved result and confidence of the coded segment corresponding to the subchannel into the Viterbi decoder, and then restores the information #B1 after cyclic iteration in sequence.

Implementation 3

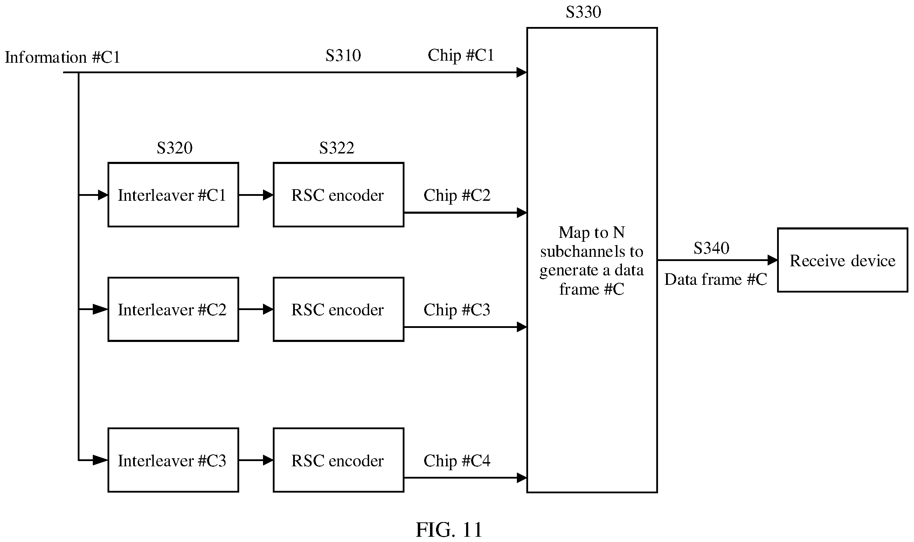

FIG. 11 is a schematic diagram of an example of a process of encoding and sending information #C1 by the transmit device (denoted as a device #C1) according to implementation 3. By way of example and not limitation, the information #C1 may be information corresponding to the HE SIG-B. A process that the device #C1 determines (or generates) the information #C1 may be the same as or similar to that in the conventional technology. To avoid repetition, detailed descriptions thereof are not described herein.

The device #C1 may be the AP, or the device #C1 may be the STA. This is not particularly limited in this application.

In addition, a channel between the device #C1 and the receive device (for example, a device #C2 described below) of the data frame may be divided into N subchannels, and N≥2.

In S310, the device #C1 may generate a coded segment #C1 based on the information #C1. For example, the device #C1 may pad W padding bits after the information #C1 is generated, to generate the coded segment #C1. A value of W corresponds to (for example, the same as) that of shift registers used in a recursive systematic convolutional encoder.

In S320, the device #C1 separately interleaves the information #C1 by using three interleavers (denoted as interleavers #C1 to #C3), to generate three pieces of information (denoted as information #C2 to #C4, that is, an example of the second information).

It should be noted that in this application, the three interleavers are different. Alternatively, any two pieces of information (specifically, bit sequences of the information) in the information #C2 to #C4 are different.

In S322, the device #C1 encodes the information #C2 to #C4 by using the recursive systematic convolutional encoder (recursive systematic convolutional encoder, RSC encoder), to generate coded segments #C2 to #C4.

For example, the device #C1 may add W bits (that is, tail bits) to the information #C2 and input the W bits to the recursive systematic convolutional encoder, to output a coded segment (that is, the coded segment #C2).

In this application, lengths of the coded segments #C1 to #C4 are the same.

It should be noted that, a process of encoding information by the recursive systematic convolutional encoder in this application may also be the same as or similar to that in the conventional technology.

It should be noted that in this application, the S310 and the S320 may be synchronously performed, or the S310 and the S320 may be asynchronously performed. This is not particularly limited in this application. In addition, when the S310 and the S320 are asynchronously performed, a sequence of the steps is not particularly limited in this application.

In S330, the device #C1 may generate a data frame #C. The data frame #C may include a plurality of coded segments in the coded segments #C1 to #C4.

For example, when a channel bandwidth is less than 80 MHz, a quantity of subchannels is less than 4, that is, $N \leq 3$. In this case, the device #C1 may select N coded segments from the coded segments #C1 to #C4, and the device #C1 may perform interleaving and constellation mapping on each of the N coded segments, to map each coded segment to one subchannel.

For another example, when the channel bandwidth is equal to 80 MHz, the quantity of subchannels is equal to 4, that is, N=4. In this case, the device #C1 may perform interleaving and constellation mapping on each of the N coded segments, to map each coded segment to one subchannel.

For another example, when the channel bandwidth is greater than 80 MHz, a quantity of subchannels is greater than 4, that is, N>4. In this case, the device #C1 may perform interleaving and constellation mapping on each of the coded segments #C1 to #C4, to map each coded segment to four subchannels in an 80 MHz bandwidth. In addition, a portion or all content (or coded segments) in the 80 MHz bandwidth may be repeatedly sent on another bandwidth.

For another example, when the channel bandwidth is equal 160 MHz, the quantity of subchannels is equal to 8, that is, N=8. In this case, the device #C1 may perform interleaving and constellation mapping on each of the coded segments #C1 to #C4, to map each coded segment to four subchannels in the 80 MHz bandwidth (denoted as a bandwidth c1). In addition, content of the bandwidth c1 may be repeatedly sent on another 80 MHz bandwidth.

Similarly, when the channel bandwidth is 240 MHz, same content is sent on three 80 MHz, and four different coded segments are sent on different 20 MHz of each 80 MHz. Similarly, when the channel bandwidth is 320 MHz, content of 80 MHz may be repeated four times.

For example, in this application, the device #C1 and the device #C2 may further include a mapping relationship #C (that is, an example of the first mapping relationship). The mapping relationship #C indicates information corresponding to an interleaver of each of the plurality of subchannels.

In addition, in this application, the mapping relationship #C may be stipulated by the communication system or a communication protocol. Alternatively, the mapping relationship #C may be negotiated by the device #C1 and the device #C2. This is not particularly limited in this application.

In this application, information corresponding to an interleaver of one subchannel (for example, a subchannel #C1) may indicate whether a coded segment corresponding to the subchannel #C1 is interleaved (for example, by one interleaver in the interleavers #C1 to #CM). Alternatively, information corresponding to an interleaver of the subchannel #C1 may indicate whether a coded segment corresponding to the subchannel #C1 is generated based on the information #C1 or the information #C2 to #C4.

In this case, when the information corresponding to the interleaver of the subchannel #C1 indicates that the coded segment carried on the subchannel #C1 is an interleavered coded segment, the information corresponding to the interleaver of the subchannel #C1 further indicates that the coded segment corresponding to the subchannel #C1 is specifically processed by the interleaver in the interleavers #C1 to #C4. Alternatively, the information corresponding to the interleaver of the subchannel #C1 further indicates the interleaver corresponding to the subchannel #C1.

In this case, in S330, the device #C1 may map the foregoing generated coded segment to the corresponding subchannel according to the mapping relationship #C.

In S340, the device #C1 may send the data frame #C through the at least two channels of N subchannels. For example, the device #C1 may puncture one or more channels of the N subchannels according to a requirement.

During puncturing, it only needs to be ensured that at least one sub-channel is not punctured.

Implementation 4

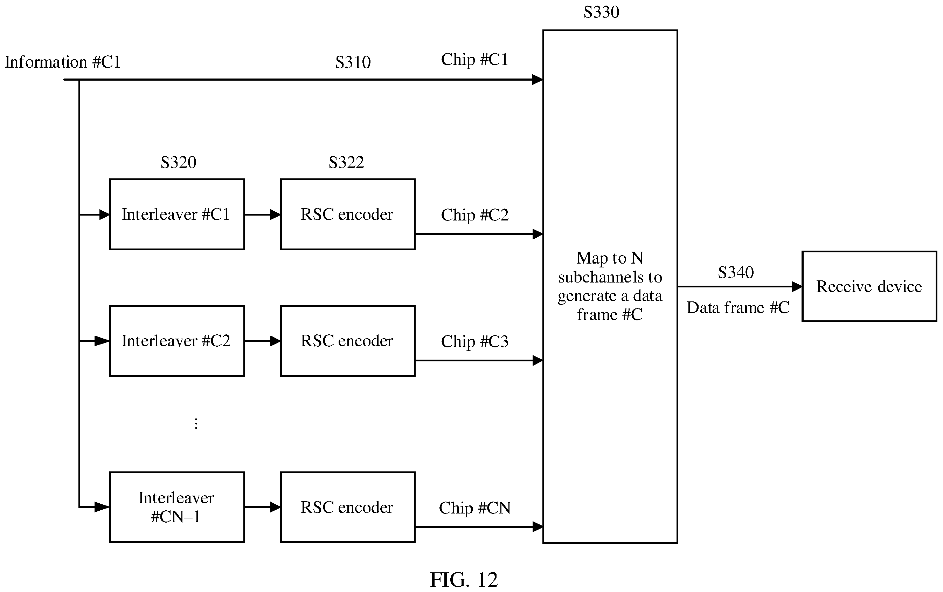

FIG. 12 is a schematic diagram of an example of an encoding and sending process of the transmit device according to implementation 4.

A difference from FIG. 11 lies in that in implementation 4, the device #C1 separately interleaves the information #C1 by using N-1 interleavers (denoted as interleavers #C1 to #CN-1), to generate N-1 pieces of information (denoted as information #C2 to #CN, that is, an example of the second information).

It should be noted that in this application, the N interleavers are different. Alternatively, any two pieces of information (specifically, bit sequences of the information) in the information #C2 to #CN are different.

In addition, the device #C1 encodes the information #C2 to #CN by using the recursive systematic convolutional encoder (Recursive Systematic Convolutional Encoder), to generate coded segments #C2 to #CN.

In this case, the data frame #C may include a plurality of coded segments in the coded segments #C1 to #CN-1.

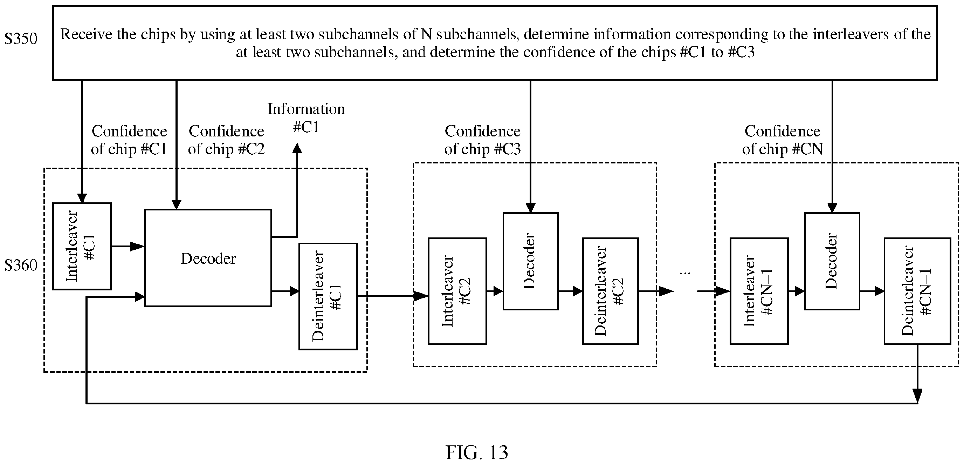

FIG. 13 is a schematic diagram of an example of a decoding process of the receive device (denoted as the device #C2) according to implementation 3 and implementation 4.

When the device #C1 is the AP, the device #C2 may be the STA or the AP.

When the device #C1 is the STA, the device #C2 may be the STA or the AP.

In S350, the device #C2 may receive the coded segment through the at least one subchannel of the N subchannels.

In S360, the device #C2 may determine the information corresponding to the interleaver carrying the coded segment.

For example, it is assumed that the device #C2 receives a coded segment #Cn through a subchannel #Cn, the device #C2 may determine, according to the mapping relationship #C, information corresponding to an interleaver of the subchannel #Cn, that is, whether the coded segment #Cn is interleaved by an interleaver #C.

For example, if the at least one received coded segment includes a coded segment that is not interleaved, the device #C2 may use the Viterbi decoder to decode the coded segment that is interleaved by the interleaver, to restore the information #C1.

For another example, if the received at least one coded segment includes a coded segment that is interleaved by the interleaver, the device #C2 may determine, according to the mapping relationship #C, an interleaver corresponding to the coded segment, and decode based on the interleaver and the Viterbi decoder, to restore the information #C1.

For example, if at least two coded segments are received, the device #C2 may decode the at least two coded segments by, for example, the turbo iterative decoding, to restore the information #C1.

In an implementation, the device #C2 determines, based on receiving of coded segments through each subchannel of the N subchannels, demodulation confidence of a coded segment corresponding to each subchannel. The demodulation confidence may also be referred to as confidence, a log likelihood ratio (log likelihood ratio, LLR), or the like. For example, if a subchannel does not carry a coded segment (in other words, the subchannel is punctured), the demodulation confidence of the coded segment corresponding to the subchannel is set to zero.

Refer to FIG. 13. In S370, the device #C2 may input the confidence of the determined coded segment #C1 to, for example, the interleaver #C1 to obtain an output result #C1, input the output result #C1 and the confidence of the coded segment #C2 to, for example, the Viterbi decoder to obtain an output result #C2, de-interleave the output result #C2 based on a de-interleaver corresponding to the interleaver #C1 to obtain an output result #C3, interleave the output result #C3 based on the interleaver C#2 to obtain an output result C#4, input the output result #C4 and the confidence of the coded segment #3 to the Viterbi decoder to obtain an output result C#5, and de-interleave the output result based on a de-interleaver corresponding to the interleaver #C2 to obtain an output result #C6. By analogy, the device #C2 interleaves an input decoding result based on an interleaver corresponding to a coded segment of each subchannel (or each subchannel), inputs an interleaved result and confidence of the coded segment corresponding to the subchannel into the Viterbi decoder, de-interleaves the output result based on a de-interleaver corresponding to the subchannel, and then restores the information #C1 after cyclic iteration in sequence.

Implementation 5

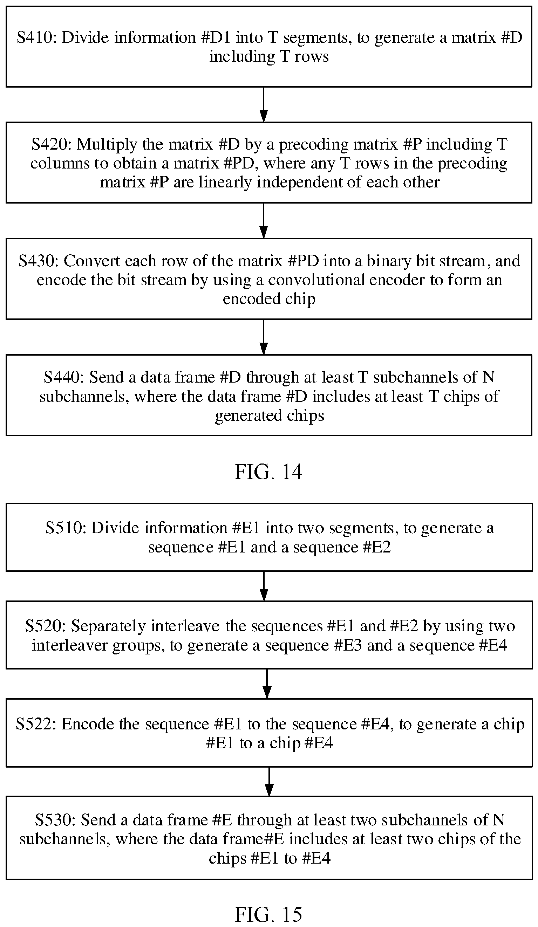

FIG. 14 is a schematic diagram of an example of a process of encoding and sending information #D1 by a transmit device (denoted as a device #D1) according to implementation 5. By way of example and not limitation, the information #D1 may be information corresponding to the HE SIG-B. A process that the device #D1 determines (or generates) the information #D1 may be the same as or similar to that in the conventional technology. To avoid repetition, detailed descriptions thereof are not described herein.

The device #D1 may be an AP, or the device #D1 may be a STA. This is not particularly limited in this application.

In addition, a channel between the device #D1 and the receive device (for example, a device #D2 described below) of the data frame may be divided into N subchannels, and N≥2.

In S410, the device #D1 divides the information #D1 (specifically, a bit stream or a bit sequence of the information #D1) into T segments, and T≥2.

In addition, every q bits in each segment are converted into a number in a finite field GF(2^q). If a length of the bit stream is not an integer multiple of q, 0 or 1 may be added.

Then, converted numbers on the finite field are arranged in a T × L matrix, and denoted as a matrix #D. A value of L is related to a length of the information #D 1, a value of T, and a value of q.

In S420, the device #D1 multiplies the matrix #D by a precoding matrix (denoted as a matrix #P), to obtain a precoded matrix #PD.

The matrix #P is an NxT matrix, and any T rows of the matrix #P are linearly independent in the finite field GF(2^q).

According to a theory of a finite field, it is known that a quantity of rows of the precoding matrix P is limited below:

$$N \le \frac{2^{Tq} - 1}{2^q - 1}.$$

By way of example and not limitation, q=2 and T=2 are used as an example. In this case, a maximum value of the quantity of rows of the precoding matrix is 5. In this case, the matrix P includes a portion or all rows of the following matrix:

$$\begin{bmatrix} 1 & 0 \\ 0 & 1 \\ 1 & 1 \\ 1 & 2 \\ 1 & 3 \end{bmatrix}.$$

In S430, the device #D1 converts each row of the matrix #PD into a binary bit stream, and encodes the bit stream by using a convolutional encoder (for example, a 1/2 convolutional encoder or a recursive systematic convolutional encoder) to form an encoded coded segment.

By way of example and not limitation, before encoding, the device #D1 may further add a parity check bit to each binary bit stream.

In addition, the device #C1 may generate a data frame #C. The data frame #C may include the foregoing encoded coded segment. Specifically, the device #C1 performs interleaving and constellation mapping on each coded segment, to map each coded segment to one subchannel (for example, a 20 MHz subchannel).

In S440, the device #D1 may send the data frame #C through at least T subchannels of N subchannels. For example, the device #D 1 may puncture one or more channels of the N subchannels according to a requirement.

In this application, for any precoding matrix P satisfying that any T rows are linearly independent in the finite field GF($2^q$), if a matrix R is a full rank matrix, a matrix obtained by multiplying the matrix P by the matrix R is also a precoding matrix satisfying that any T rows are linearly independent in the finite field GF($2^q$).

That is, in this application, when the matrix P is selected, if the upper half part of a selected matrix is an identity matrix, the first T rows of the encoded matrix PD directly correspond to the original signal source sequence. In this case, even if the receive end only receives a portion of the first T rows, the receive end can correctly decode a portion of information.

Therefore, during puncturing, it only needs to be ensured that the at least T subchannels are not punctured.

Correspondingly, in implementation 5, a receive device (denoted as a device #D2) may receive coded segments (K>_T) from K subchannels of the N subchannels during decoding.

Then, the device #D2 may determine a row of the precoding matrix P corresponding to each of the K subchannels.

Alternatively, the device #D2 may select any T subchannels from the K subchannels, and determine a row of the precoding matrix P corresponding to each of the T subchannels.

It is assumed that the coded segment #Dt is generated based on a $t^{th}$ row of the matrix PD, a row of the precoding matrix corresponding to a subchannel carrying the coded segment Dt may be understood as a $t^{th}$ row of the precoding matrix P.

For example, in this application, the device #D2 may include a mapping relationship #D (that is, an example of a first mapping relationship). The mapping relationship #D indicates a precoding matrix corresponding to each of a plurality of subchannels, that is, the row of the precoding matrix P.

In addition, in this application, the mapping relationship #D may be stipulated by the communication system or a communication protocol. Alternatively, the mapping relationship #D may be negotiated by the device #D 1 and the device #D2. This is not particularly limited in this application.

In an implementation, the device #D2 may decode coded segments on the K subchannels by using, for example, a Viterbi decoder, to obtain a decoding result matrix E. The decoding result matrix E includes K rows. The K rows one-to-one correspond to the K subchannels, and each row includes a decoding result of a coded segment on a corresponding subchannel.

In addition, the device #D2 may use a row of a matrix P corresponding to each of the K subchannels as a row of a decoding matrix U, to generate a decoding matrix U including K rows.

In addition, the device #D2 may determine an inverse matrix H of the decoding matrix U.

The device #D2 may multiply the matrix E by the matrix H, and use a result as a decoding result, to restore the information #D1.

In another implementation, the device #D2 may decode coded segments on any T subchannels of the K subchannels by using, for example, the Viterbi decoder, to obtain a decoding result matrix E'. The decoding result matrix E' includes T rows. The T rows one-to-one correspond to the T subchannels, and each row includes a decoding result of a coded segment on a corresponding subchannel.

In addition, the device #D2 may use a row of a matrix P corresponding to each of the T subchannels as a row of a decoding matrix U', to generate a decoding matrix U' including T rows.

In addition, the device #D2 may determine an inverse matrix H' of the decoding matrix U'.

The device #D2 may multiply the matrix E' by the matrix H', and use a result as a decoding result, to restore the information #D1.

It should be noted that when the device #D1 is an AP, the device #D2 may be a STA or the AP.

When the device #D1 is the STA, the device #D2 may be the STA or the AP.

Implementation 6

FIG. 15 is a schematic diagram of an example of a process of encoding and sending information #E1 by a transmit device (denoted as a device #E1) according to implementation 6. By way of example and not limitation, the information #E1 may be information corresponding to an HE SIG-B. A process that the device #E1 determines (or generates) the information #E1 may be the same as or similar to that in the conventional technology. To avoid repetition, detailed descriptions thereof are not described herein.

The device #E1 may be an AP, or the device #E1 may be a STA. This is not particularly limited in this application.

In addition, a channel between the device #E1 and the receive device (for example, a device #E2 described below) of the data frame may be divided into N subchannels, and N≥2.

In S510, the device #E1 may divide the information #E1 (specifically, a bit stream of the information #E1) into two equal-length sequences, and denoted as a sequence #E1 and a sequence #E2.

It is assumed that lengths of the sequence #E1 and the sequence #E2 are L.

When a half length of the information #E1 is less than L, a padding bit (for example, 0 or 1) may be added to a sequence obtained after the information #E1 is segmented, to generate the sequence #E1 and the sequence #E2.

In S520, the device #E1 separately interleaves the sequence #E1 and the sequence #E2 by using two interleaver groups (denoted as interleaver groups #E1 and #E2), to generate two sequences (denoted as sequences #E3 and #E4, that is, an example of second information).

Specifically, in this application, each interleaver group includes two interleavers.

In addition, two pieces of information one-to-one correspond to the two interleaver groups.

It is assumed that the sequence #E3 corresponds to an interleaver group #E1, a process of generating the sequence #E3 is:

Interleaving the sequence #E1 by using one interleaver in the interleaver group #E1, to obtain a sequence #E1';
interleaving the sequence #E2 by using another interleaver in the interleaver group #E1, to obtain a sequence #E2'; and
adding the sequence #E1' and the sequence #E2' (specifically, binary addition), to obtain the sequence #E3.

It should be noted that in this application, the two interleaver groups are different. Alternatively, the sequences #E3 and #E4 are different.

By way of example and not limitation, two interleavers in a same interleaver group may meet the following conditions:

Two interleavers in an example of an interleaver group #Em in a plurality of interleaver groups are used for description, m represents a sequence number of the interleaver group #Em in the plurality of interleaver groups, alternatively, m is related to an index of a subchannel corresponding to the interleaver group #Em.

To be specific, a sequence processed by using an interleaver in the interleaver group #Em is the same as that of the sequence #E1. To be specific, one interleaver in the interleaver group #Em does not change the sequence.

A sequence processed by using another interleaver in the interleaver group #Em is cyclically shifted by m bits relative to the sequence #E2.

To be specific, a location of the sequence #E2 that is interleaved on an ith bit by using the interleaver is

$$\pi_m^2(i) = \mathrm{mod}(i+m, L). \quad \pi_k^2(i) = \mathrm{mod}(i + k, L).$$

In S522, the device #E1 separately encodes the sequences #E1 to #E4 by using an encoder, for example, a 1/2 convolutional code encoder or a recursive systematic convolutional encoder, to generate coded segments #E1 to #E4.

In S530, the device #E1 may generate a data frame #E. The data frame #E may include a plurality of coded segments in the coded segments #E1 to #E4.

For example, when a channel bandwidth is less than 80 MHz, a quantity of subchannels is less than 4, that is, $N \leq 3$. In this case, the device #E1 may select N coded segments from the coded segments #E1 to #E4, and the device #E1 may perform interleaving and constellation mapping on each of the N coded segments, to map each coded segment to one subchannel.

For another example, when the channel bandwidth is equal to 80 MHz, the quantity of subchannels is equal to 4, that is, N=4. In this case, the device #E1 may perform interleaving and constellation mapping on each of the N coded segments, to map each coded segment to one subchannel.

For another example, when the channel bandwidth is greater than 80 MHz, a quantity of subchannels is greater than 4, that is, N>4. In this case, the device #E1 may perform interleaving and constellation mapping on each of the coded segments #E1 to #E4, to map each coded segment to four subchannels in an 80 MHz bandwidth. In addition, a portion or all content (or coded segments) in the 80 MHz bandwidth may be repeatedly sent on another bandwidth.

For another example, when the channel bandwidth is equal 160 MHz, the quantity of subchannels is equal to 8, that is, N=8. In this case, the device #E1 may perform interleaving and constellation mapping on each of the coded segments #E1 to #E4, to map each coded segment to four subchannels in the 80 MHz bandwidth (denoted as a bandwidth e1). In addition, content of the bandwidth e1 may be repeatedly sent on another 80 MHz bandwidth.

Similarly, when the channel bandwidth is 240 MHz, same content is sent on three 80 MHz, and four different coded segments are sent on different 20 MHz of each 80 MHz. Similarly, when the channel bandwidth is 320 MHz, content of 80 MHz may be repeated four times.

For example, in this application, the device #E1 and the device #E2 may further include a mapping relationship #E (that is, an example of a first mapping relationship). The mapping relationship #E indicates information corresponding to an interleaver group of each of the plurality of subchannels.

In addition, in this application, the mapping relationship #E may be stipulated by the communication system or a communication protocol. Alternatively, the mapping relationship #E may be negotiated by the device #E1 and the device #E2. This is not particularly limited in this application.

In this application, information corresponding to an interleaver group of one subchannel (for example, a subchannel #E1) may indicate whether a coded segment corresponding to the subchannel #E1 is interleaved (for example, by one interleaver in interleaver groups #E1 to #E3). Alternatively, information corresponding to an interleaver group of the subchannel #E1 may indicate whether a coded segment corresponding to the subchannel #E1 is generated based on the information #E1 or the information #E2 to #E4.

In this case, when the information corresponding to the interleaver group of the subchannel #E1 indicates that the coded segment carried on the subchannel #E1 is an interleavered coded segment, the information corresponding to the interleaver group of the subchannel #E1 further indicates that the coded segment corresponding to the subchannel #E1 is specifically processed by the interleaver group in the interleaver groups #E1 to #E4. Alternatively, the information corresponding to the interleaver group of the subchannel #E1 further indicates an interleaver group corresponding to the subchannel #E1.

In this case, in S530, the device #E1 may map the foregoing generated coded segment to a corresponding subchannel according to the mapping relationship #E.

In S540, the device #E1 may send the data frame #E through the at least two channels of N subchannels. For example, the device #E1 may puncture one or more channels of the N subchannels according to a requirement.

During puncturing, it only needs to be ensured that at least two subchannels are not punctured.

Implementation 7

A difference from FIG. 15 lies in that in implementation 7, the device #E1 separately interleaves the sequences #E1 and #E2 by using N-2 interleaver groups (denoted as interleaver groups #E1 and #EN-2), to generate N-2 sequences (denoted as sequences #E3 to #EN, that is, an example of second information).

It should be noted that in this application, the N-2 interleavers are different. Alternatively, any two pieces of information (specifically, bit sequences of the information) in the information #E3 to #EN are different.

In addition, the device #E1 separately encodes the sequences #E1 to #EN by using an encoder, to generate coded segments #E1 to #EN.

In this case, the data frame #E may include a plurality of coded segments in the coded segments #E1 to #EN.

Correspondingly, in implementation 6 and implementation 7, the receive device (denoted as a device #E2) may receive coded segments from K subchannels of the N subchannels during decoding, and $K \geq 2$.

When the device #E1 is an AP, the device #E2 may be a STA or the AP.

When the device #E1 is the STA, the device #E2 may be the STA or the AP.

In addition, the device #E2 may decode, by using a decoder, coded segments carried on the K subchannels.

In addition, the device #E2 may determine information corresponding to an interleaver group of the K subchannels.

For example, it is assumed that the device #E2 receives a coded segment #Ek through a subchannel #Ek, the device #E2 may determine, according to the mapping relationship #E, information corresponding to an interleaver of the subchannel #Ek, that is, whether the coded segment #Ek is interleaved by the interleaver group.

For example, if the two received coded segments include a coded segment that is not interleaved through the interleaver group, the device #E2 may directly use the two coded segments to restore the information #E1.

For another example, if one coded segment (for example, the coded segment #E1) that is not interleaved through the interleaver group and at least one coded segment (for example, the coded segment #E3) that is interleaved through the interleaver group are received, the device #E2 may determine an interleaver group of the coded segment #E3 (or a subchannel carrying the coded segment #E3) according to the mapping relationship #E, and restore the coded segment #E2 based on a decoded coded segment #E3, the interleaver group, and a decoded coded segment #E1, to restore the information #E1 based on the coded segment #E2 and the coded segment #E1.

For another example, if two coded segments (for example, the coded segments #E3 and #E4) that are interleaved through the interleaver group are received, the device #E2 may determine, according to the mapping relationship #E, an interleaver group of the coded segment #E3 (or a subchannel carrying the coded segment #E3) and an interleaver group of the coded segment #E4 (or a subchannel carrying the coded segment #E4), and restore the coded segment #E1 and the coded segment #E2 based on a decoded coded segment #E3, a decoded coded segment #E4, and the interleaver group, to restore the information #E1 based on the coded segment #E2 and the coded segment #E1.

Embodiments of this application provide a communication apparatus. In a possible implementation, the apparatus is configured to implement the steps or procedures corresponding to the receive end in the foregoing method embodiments. In another possible implementation, the apparatus is configured to implement steps or procedures corresponding to the transmit end in the foregoing method embodiments.

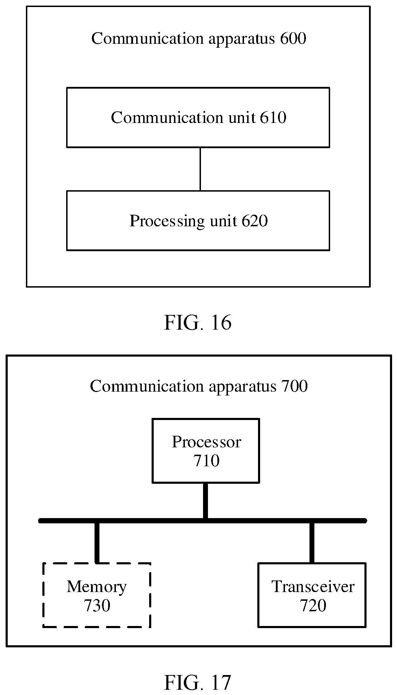

FIG. 16 is a schematic block diagram of a communication apparatus according to this embodiment of this application. As shown in FIG. 16, the apparatus 600 may include a communication unit 610 and a processing unit 620. The communication unit 610 may communicate with the outside, and the processing unit 620 is configured to process data. The communication unit 610 may also be referred to as a communication interface or a transceiver unit.

In a possible design, the apparatus 600 may implement steps or procedures performed by a transmit device (for example, the device #A1, the device #B1, the device #C1, the device #D1, or the device #E1) in the foregoing method embodiments. The processing unit 620 is configured to perform operations related to processing of the transmit device in the foregoing method embodiments. The communication unit 610 is configured to perform operations related to sending of the transmit device in the foregoing method embodiments.

In another possible design, the apparatus 600 may implement steps or procedures performed by a receive device (for example, the device #A2, the device #B2, the device #C2, the device #D2, or the device #E2) in the foregoing method embodiments. The communication unit 610 is configured to perform operations related to receiving of the receive device in the foregoing method embodiments. The processing unit 620 is configured to perform operations related to processing of the receive device in the foregoing method embodiments.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the transmit device in the foregoing embodiments, and may be configured to perform the procedures and/or the steps corresponding to the transmit device in the foregoing method embodiments. Alternatively, the apparatus 600 may be specifically the receive device in the foregoing embodiments, and may be configured to perform the procedures and/or the steps corresponding to the receive device in the foregoing method embodiments. To avoid repetition, details are not described herein again.

The apparatus 600 in each of the foregoing solutions has a function of implementing the corresponding steps performed by the transmit device in the foregoing methods, or the apparatus 600 in each of the foregoing solutions has a function of implementing the corresponding steps performed by the receive end in the foregoing methods. The function may be implemented by hardware, or may be implemented by hardware executing corresponding software. The hardware or software includes one or more modules corresponding to the foregoing function. For example, a communication unit may be replaced with a transceiver (for example, a sending unit in the communication unit may be replaced with a transmitter, and a receiving unit in the communication unit may be replaced with a receiver), and another unit such as a processing unit may be replaced with a processor, to separately perform receiving and sending operations and a related processing operation in the method embodiments.

In addition, the communication unit may alternatively be a transceiver circuit (where for example, the transceiver circuit may include a receiver circuit and a transmitter circuit), and the processing unit may be a processing circuit. In this embodiment of this application, the apparatus in FIG. 16 may be an AP or a STA in the foregoing embodiments, or may be a chip or a chip system, for example, a system on coded segment (system on coded segment, SoC). The communication unit may be an input/output circuit or a communication interface. The processing unit is a processor, a microprocessor, or an integrated circuit integrated on the coded segment. This is not limited herein.

FIG. 17 shows a communication apparatus 700 according to this embodiment of this application. The apparatus 700 includes a processor 710 and a transceiver 720. The processor 710 and the transceiver 720 communicate with each other through an internal connection path, and the processor 710 is configured to execute instructions, to control the transceiver 720 to send a signal and/or receive a signal.

Optionally, the apparatus 700 may further include a memory 730. The memory 730 communicates with the processor 710 and the transceiver 720 through an internal connection path. The memory 730 is configured to store instructions, and the processor 710 may execute the instructions stored in the memory 730. In another possible implementation, the apparatus 700 is configured to implement the procedures and steps corresponding to the transmit device (for example, the device #A1, the device #B1, the device #C1, the device #D1, and the device #E1) in the foregoing method embodiments. In a possible implementation, the apparatus 700 is configured to implement the procedures and steps corresponding to the receive device (for example, the device #A2, the device #B2, the device #C2, the device #D2, and the device #E2) in the foregoing method embodiments.

It should be understood that the apparatus 700 may be specifically an AP or a STA in the foregoing embodiments, or may be a chip or a chip system. Correspondingly, the transceiver 720 may be a transceiver circuit of the coded segment. This is not limited herein. Specifically, the apparatus 700 may be configured to perform the steps and/or the procedures corresponding to the transmit end or the receive end in the foregoing method embodiments. Optionally, the memory 730 may include a read-only memory and a random access memory, and provide instructions and data for the processor. A part of the memory may further include a non-volatile random access memory. For example, the memory may further store information about a device type. The processor 710 may be configured to execute the instructions stored in the memory, and when the processor 710 executes the instructions stored in the memory, the processor 710 is configured to perform the steps and/or the procedures corresponding to the AP or the STA in the foregoing method embodiments.

In an implementation process, the steps in the foregoing methods may be implemented by using a hardware integrated logic circuit in the processor or by using instructions in a form of software. The steps of the methods disclosed with reference to embodiments of this application may be directly performed by using a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor. To avoid repetition, details are not described herein again.

It should be noted that the processor in embodiments of this application may be an integrated circuit coded segment, and has a signal processing capability. In an implementation process, steps in the foregoing method embodiments may be implemented by using a hardware integrated logic circuit in the processor or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams disclosed in embodiments of this application. The general-purpose processor may be a microprocessor, or the processor may be any conventional processor or the like. The steps of the methods disclosed with reference to the embodiments of this application may be directly performed by using a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the system and methods described in this specification include but are not limited to these memories and any memory of another suitable type.

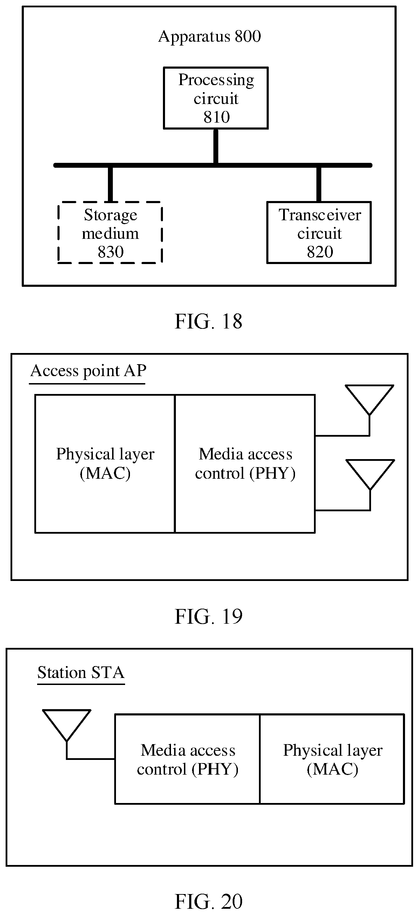

FIG. 18 shows a communication apparatus 800 according to this embodiment of this application. The apparatus 800 includes a processing circuit 810 and a transceiver circuit 820. The processing circuit 810 and the transceiver circuit 820 communicate with each other through an internal connection path. The processing circuit 810 is configured to execute instructions, to control the transceiver circuit 820 to send a signal and/or receive a signal.

Optionally, the apparatus 800 may further include a storage medium 830. The storage medium 830 communicates with the processing circuit 810 and the transceiver circuit 820 through an internal connection path. The storage medium 830 is configured to store instructions, and the processing circuit 810 may execute the instructions stored in the storage medium 830. In another possible implementation, the apparatus 800 is configured to implement the procedures and steps corresponding to the transmit device (for example, the device #A1, the device #B 1, the device #C1, the device #D1, and the device #E1) in the foregoing method embodiments. In a possible implementation, the apparatus 800 is configured to implement the steps or procedures corresponding to the receive device (for example, the device #A2, the device #B2, the device #C2, the device #D2, and the device #E2) in the foregoing method embodiments.

FIG. 19 is a diagram of an internal structure of an AP product. The AP may have a plurality of antennas or may have a single antenna. In FIG. 19, the AP includes a physical layer (physical layer, PHY) processing circuit and a media access control (media access control, MAC) processing circuit. The physical layer processing circuit may be configured to process a physical layer signal, and the MAC layer processing circuit may be configured to process a MAC layer signal.

FIG. 20 is a diagram of an internal structure of a STA product. The STA product is generally a terminal product supporting 802.11 series standards, such as a mobile phone and a notebook computer. FIG. 20 shows a structural diagram of a STA with a single antenna. In an actual scenario, the STA may also be a device having a plurality of and more than two antennas. In FIG. 20, the STA may include the PHY layer processing circuit and the MAC layer processing circuit. The physical layer processing circuit may be configured to process the physical layer signal, and the MAC layer processing circuit may be configured to process the MAC layer signal.

According to the method provided in embodiments of this application, this application further provides a computer program product. The computer program product includes computer program code. When the computer program code is run on a computer, the computer is enabled to perform the method in any implementation shown in FIG. 7 to FIG. 15.

According to the method provided in embodiments of this application, this application further provides a computer-readable medium. The computer-readable medium stores program code. When the program code is run on a computer, the computer is enabled to perform the method in any implementation shown in FIG. 7 to FIG. 15.

According to the method provided in embodiments of this application, this application further provides a system, including the foregoing one or more stations and one or more access points.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief descriptions, for a detailed working process of the foregoing system, apparatus, and unit, refer to a corresponding process in the method embodiments. Details are not described herein again.

In the several embodiments provided in this application, it should be understood that, the disclosed system, apparatuses, and methods may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in the embodiments of this application may be integrated into one processing unit, each of the units may exist alone physically, or two or more units are integrated into one unit.

When the functions are implemented in a form of a software functional unit and sold or used as an independent product, the functions may be stored in the computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data frame sending method, executed in a communication system in which a channel is divided into N subchannels, and N≥2, wherein the method comprises:

   encoding, by a transmit device, first information by using a first encoder, to generate a first coded segment and a second coded segment, wherein the first encoder comprises a 1/2 convolutional encoder, and the first information comprises a portion or all of information corresponding to a preamble field in a data frame;
   interleaving the first information by using M interleavers, to generate M pieces of information, wherein the M pieces of information one-to-one correspond to the M interleavers, a $m^{th}$ piece of information in the M pieces of information is generated based on interleaving processing of a $m^{th}$ interleaver in the M interleavers, the $m^{th}$ piece of information corresponds to the $m^{th}$ interleaver, $m \in [2, M+1]$, and M≥1;
   encoding the M pieces of information by using the first encoder, to generate 2M coded segments, wherein a $(2m+1)^{th}$ coded segment and a $(2(m+1))^{th}$ coded segment in the 2M coded segments are generated after the $m^{th}$ piece of information is encoded;
   generating the data frame, wherein the data frame comprises N coded segments, the N coded segments one-to-one correspond to the N subchannels, each subchannel carries a corresponding coded segment, and the N coded segments comprise all or a portion of the first coded segment, the second coded segment, and the 2M coded segments; and
   sending the data frame through at least two subchannels of the N subchannels.

2. The method according to claim 1, wherein M=1.

3. The method according to claim 1, wherein a value of M is a result obtained by subtracting 1 from a result of rounding up N/2.

4. The method according to any one of claims 1 to 3, wherein the method further comprises:
   determining the M interleavers according to a first mapping relationship, wherein the first mapping relationship comprises information corresponding to an interleaver of each subchannel of the N subchannels, the $m^{th}$ interleaver is an interleaver corresponding to a $(2m+1)^{th}$ subchannel and a $(2(m+1))^{th}$ subchannel, the $(2m+1)^{th}$ subchannel is used to transmit the $(2m+1)^{th}$ coded segment, and the $(2(m+1))^{th}$ subchannel is used to transmit the $(2(m+1))^{th}$ coded segment.

5. A data frame sending method, executed in a communication system in which a channel is divided into N subchannels, and N≥2, wherein the method comprises:

   generating, by a transmit device, a first coded segment based on first information, wherein the first information comprises a portion or all of information corresponding to a preamble field in a data frame;
   interleaving the first information by using M interleavers, to generate M pieces of information, wherein the M pieces of information one-to-one correspond to the M interleavers, a $m^{th}$ piece of information in the M pieces of information is generated based on interleaving processing of a $m^{th}$ interleaver in the M interleavers, the $m^{th}$ piece of information corresponds to the $m^{th}$ interleaver, $m \in [2, M+1]$, and M≥1;
   encoding the M pieces of information by using a first encoder, to generate M coded segments, wherein the first encoder comprises a recursive systematic convolutional encoder;

generating the data frame, wherein the data frame comprises N coded segments, the N coded segments one-to-one correspond to the N subchannels, each subchannel carries a corresponding coded segment, and the N coded segments comprise all or a portion of the first coded segment and the M coded segments; and

sending the data frame through at least two subchannels of the N subchannels.

6. The method according to claim 5, wherein M=3.

7. The method according to claim 5, wherein M=N-1.

8. The method according to any one of claims 5 to 7, wherein the method further comprises:
determining the M interleavers according to a first mapping relationship, wherein the first mapping relationship comprises information corresponding to an interleaver of each subchannel of the N subchannels, the $m^{th}$ interleaver is an interleaver corresponding to a $m^{th}$ subchannel, the $m^{th}$ subchannel is used to transmit a $m^{th}$ coded segment, and the $m^{th}$ coded segment is generated after the $m^{th}$ piece of information is encoded.

9. A data frame receiving method, executed in a communication system in which a channel is divided into N subchannels, and N≥2, wherein the method comprises:

receiving, by a receive device, a data frame through K subchannels in the N subchannels, and N≥K≥2; and

decoding, based on information corresponding to an interleaver of each subchannel of the K subchannels and a first decoder, a coded segment carried on each subchannel of at least two subchannels, to obtain first information, wherein the first information comprises a portion or all of information corresponding to a preamble field in the data frame; a coded segment carried on a $k^{th}$ subchannel in the K subchannels is generated after the first information is interleaved by a $k^{th}$ interleaver and encoded by a first encoder; or a coded segment carried on a $k^{th}$ subchannel in the K subchannels is generated after the first information is encoded by a first encoder; the $k^{th}$ interleaver is an interleaver corresponding to the $k^{th}$ subchannel, and the first decoder corresponds to the first encoder; the first encoder comprises a 1/2 convolutional encoder or a recursive systematic convolutional encoder; and k∈[1, K].

10. The method according to claim 9, wherein the decoding, based on information corresponding to an interleaver of each subchannel of the K subchannels and a first decoder comprises:
setting a log-likelihood ratio of coded segments carried on subchannels other than the K subchannels in the N subchannels to zero.

11. The method according to claim 9 or 10, wherein the first decoder comprises a Viterbi decoder.

12. The method according to any one of claims 9 to 11, wherein the method further comprises:
determining, according to a first mapping relationship, information corresponding to an interleaver of each subchannel of the K subchannels, wherein the first mapping relationship comprises information corresponding to an interleaver on each channel of the N subchannels.

13. A data frame receiving method, executed in a communication system in which a channel is divided into N subchannels, and N≥2, wherein the method comprises:

precoding first information by using a precoding matrix, to generate a first information matrix, wherein the first information matrix comprises N rows, the precoding matrix comprises N rows, the N rows of the precoding matrix one-to-one correspond to the N subchannels, any T rows of the precoding matrix are linearly independent of each other, and T≥2;

encoding each row of the first information matrix by using a first encoder, to generate N coded segments, wherein an $n^{th}$ coded segment in the N coded segments is generated after an $n^{th}$ row of the first information matrix is encoded, and n∈[1, N];

generating a data frame, wherein the data frame comprises the N coded segments, the N coded segments one-to-one correspond to the N subchannels, and each subchannel carries a corresponding coded segment; and

sending the data frame through at least two subchannels of the N channels.

14. The method according to claim 13, wherein the precoding first information by using a precoding matrix comprises:

dividing the first information into T information segments;

generating a second information matrix based on the T information segments, wherein the second information matrix comprises T rows, and each row corresponds to one information segment; and

multiplying the precoding matrix by the second information matrix, to obtain the first information matrix, wherein the precoding matrix comprises T columns.

**15.** The method according to claim 14, wherein each element in the second information matrix corresponds to a number on a first finite field, and magnitude of the first finite field is $2^q$; each element in $t^{th}$ row in the second information matrix corresponds to q bits of a $t^{th}$ information segment in the T information segments; the $t^{th}$ row corresponds to the $t^{th}$ information segment, and $t \in [1, T]$; each element in the second information matrix is obtained by converting the corresponding q bits; and

any T rows of the precoding matrix are linearly independent of each other in the first finite field.

**16.** The method according to claim 15, wherein when q=2 and T=2, the precoding matrix comprises all or a portion of rows of a P matrix below:

$$P = \begin{bmatrix} 1 & 0 \\ 0 & 1 \\ 1 & 1 \\ 1 & 2 \\ 1 & 3 \end{bmatrix}.$$

**17.** The method according to any one of claims 13 to 16, wherein before the encoding each row of the first information matrix by using a first encoder, the method further comprises:

adding a parity check bit to each row of the first information matrix.

**18.** The method according to any one of claims 13 to 17, wherein a transmit device stores a first mapping relationship, and the first mapping relationship indicates a one-to-one correspondence between the N rows in the precoding matrix and the N subchannels.

**19.** An information sending method, executed in a communication system in which a channel is divided into N subchannels, and N≥2, wherein the method comprises:

receiving, by a receive device, a data frame through K subchannels in the N subchannels, and N≥K≥2; and

decoding, based on a first decoder and a row of a precoding matrix corresponding to each subchannel of the K subchannels, a coded segment carried on each of at least two subchannels, to obtain first information, wherein the first information comprises a portion or all of information corresponding to a preamble field in the data frame; a coded segment carried on a $k^{th}$ subchannel in the K subchannels is generated after an element in a $k^{th}$ row in a first information matrix is encoded by using a first encoder; the first information matrix is generated after the first information is precoded by using the precoding matrix; any T rows of the precoding matrix are linearly independent of each other, and T≥2; and the first decoder corresponds to the first encoder.

**20.** The method according to claim 19, wherein when q=2 and T=2, the precoding matrix comprises:

$$P = \begin{bmatrix} 1 & 0 \\ 0 & 1 \\ 1 & 1 \\ 1 & 2 \\ 1 & 3 \end{bmatrix}.$$

21. The method according to claim 19 or 20, wherein the method further comprises:
determining, according to a first mapping relationship, a row of a precoding matrix corresponding to each subchannel of the K subchannels, wherein the first mapping relationship indicates a one-to-one correspondence between N rows in the precoding matrix and the N subchannels.

22. A data frame sending method, executed in a communication system in which a channel is divided into N subchannels, and N≥2, wherein the method comprises:

dividing, by a transmit device, first information, to generate a first coded segment and a second coded segment;
processing the first coded segment and the second coded segment based on M interleaver groups, to obtain M coded segments, wherein the M coded segments one-to-one correspond to the M interleaver groups, and each coded segment is obtained based on a corresponding interleaver group; each interleaver group comprises two interleavers; a $m^{th}$ coded segment in the M coded segments is obtained after an $m\_1^{th}$ sequence is added to a $m\_2^{th}$ sequence, the $m\_1^{th}$ sequence is obtained after the first coded segment is interleaved by using one interleaver in a $m^{th}$ interleaver group in the M interleaver groups, and the $m\_2^{th}$ sequence is obtained after the second coded segment is interleaved by another interleaver in the $m^{th}$ interleaver group; the $m^{th}$ coded segment corresponds to the $m^{th}$ interleaver group; $m \in [3, M+2]$, and M≥1;
generating a data frame, wherein the data frame comprises N coded segments, the N coded segments one-to-one correspond to the N subchannels, each subchannel carries a corresponding coded segment, and the N coded segments comprise all or a portion of the first coded segment, the second coded segment, and the M coded segments; and
sending the data frame through at least two subchannels of the N subchannels.

23. The method according to claim 22, wherein M=2.

24. The method according to claim 22, wherein M=N-2.

25. The method according to any one of claims 22 to 24, wherein the $m\_1^{th}$ sequence is the same as that of the first coded segment, and the $m\_2^{th}$ sequence is a sequence formed after a bit in the second coded segment is cyclically shifted by at least one bitcoded segment.

26. The method according to any one of claims 22 to 25, wherein the method further comprises:
determining the M interleaver groups according to a first mapping relationship, wherein the first mapping relationship comprises information corresponding to an interleaver group of each subchannel of the N subchannels, a $m^{th}$ interleaver is an interleaver corresponding to a $m^{th}$ subchannel; and the $m^{th}$ subchannel is used to transmit the $m^{th}$ coded segment.

27. A data frame receiving method, executed in a communication system in which a channel is divided into N subchannels, and N≥2, wherein the method comprises:

receiving, by a receive device, a data frame through K subchannels in the N subchannels, and N≥K≥2; and
decoding, based on a first decoder and information corresponding to an interleaver group of each subchannel of the K subchannels, a coded segment carried on each subchannel of at least two subchannels, to obtain first information, wherein the first information comprises a portion or all of information corresponding to a preamble field in the data frame; a $k^{th}$ coded segment carried on a $k^{th}$ subchannel in the K subchannels is a first coded segment or a second coded segment obtained after the first information is divided, or a $k^{th}$ coded segment is obtained after a first coded segment and a second coded segment are processed by using a $k^{th}$ interleaver group corresponding to the $k^{th}$ subchannel; each interleaver group comprises two interleavers; the $k^{th}$ coded segment is obtained after a $k\_1^{th}$ sequence is added to a $k\_2^{th}$ sequence; and the $k\_1^{th}$ sequence is obtained after the first coded segment is interleaved by one interleaver in the $k^{th}$ interleaver group, the $k\_2^{th}$ sequence is obtained after the second coded segment is interleaved by another interleaver in the $k^{th}$ interleaver group, and $k \in [1, K]$.

28. The method according to claim 27, wherein the $k\_1^{th}$ sequence is the same as that of the first coded segment, and the $k\_2^{th}$ sequence is a sequence formed after a bit in the second coded segment is cyclically shifted by at least one bitcoded segment.

29. The method according to claim 27 or 28, wherein the method further comprises:

determining, according to a first mapping relationship, the information corresponding to the interleaver group of each subchannel of the K subchannels, wherein the first mapping relationship comprises information corresponding to an interleaver group of each subchannel of the N subchannels.

30. A wireless communication apparatus, comprising:

a unit, configured to implement the method according to any one of claims 1 to 4;
a unit, configured to implement the method according to any one of claims 5 to 8;
a unit, configured to implement the method according to any one of claims 9 to 12;
a unit, configured to implement the method according to any one of claims 13 to 18;
a unit, configured to implement the method according to any one of claims 19 to 21;
a unit, configured to implement the method according to any one of claims 22 to 26; or
a unit, configured to implement the method according to any one of claims 27 to 29.

31. A computer-readable storage medium, wherein the computer-readable storage medium stores a computer program; and when the computer program runs,

an apparatus is enabled to perform the method according to any one of claims 1 to 4;
an apparatus is enabled to perform the method according to any one of claims 5 to 8;
an apparatus is enabled to perform the method according to any one of claims 9 to 12;
an apparatus is enabled to perform the method according to any one of claims 13 to 18;
an apparatus is enabled to perform the method according to any one of claims 19 to 21;
an apparatus is enabled to perform the method according to any one of claims 22 to 26; or
an apparatus is enabled to perform the method according to any one of claims 27 to 29.

32. A chip system, comprising a processor, configured to invoke a computer program from a memory and run the computer program, so that

a communication apparatus on which the chip system is installed is enabled to perform the method according to any one of claims 1 to 4;
a communication apparatus on which the chip system is installed is enabled to perform the method according to any one of claims 5 to 8;
a communication apparatus on which the chip system is installed is enabled to perform the method according to any one of claims 9 to 12;
a communication apparatus on which the chip system is installed is enabled to perform the method according to any one of claims 13 to 18;
a communication apparatus on which the chip system is installed is enabled to perform the method according to any one of claims 19 to 21;
a communication apparatus on which the chip system is installed is enabled to perform the method according to any one of claims 22 to 26; or
a communication apparatus on which the chip system is installed is enabled to perform the method according to any one of claims 27 to 29.

33. A communication system, comprising:

a transmit device, configured to perform the method according to any one of claims 1 to 4, or perform the method according to any one of claims 5 to 8; and
a receive device, configured to perform the method according to any one of claims 9 to 12.

34. A communication system, comprising:

a transmit device, configured to perform the method according to any one of claims 13 to 18, and
a receive device, configured to perform the method according to any one of claims 19 to 21.

35. A communication system, comprising:

a transmit device, configured to perform the method according to any one of claims 22 to 26, and
a receive device, configured to perform the method according to any one of claims 27 to 29.

**36.** The communication system according to any one of claims 33 to 35, wherein

the transmit device comprises an access point AP, and the receive device comprises a station STA;
the transmit device comprises a STA, and the receive device comprises an AP; or
the transmit device comprises a STA, and the receive device comprises a STA.

Primary 20 MHz channel    Secondary 20 MHz channel    Secondary 40 MHz channel

Busy

Not punctured        Punctured

FIG. 1

HE-SIG-B of a 20 MHz bandwidth

| CC |
|---|

HE-SIG-B of a 40 MHz bandwidth

| CC1 |
|---|
| CC2 |

HE-SIG-B of a 80 MHz bandwidth

| CC1 |
|---|
| CC2 |
| CC1 |
| CC2 |

HE-SIG-B of a 160 MHz bandwidth

| CC1 |
|---|
| CC2 |
| CC1 |
| CC2 |
| CC1 |
| CC2 |
| CC1 |
| CC2 |

From a low frequency to a high frequency

FIG. 2

FIG. 3

FIG. 4

HE MU PPDU

| | | | | | 4 µs for each symbol | Different types of HE-LTFs have different duration | | | |
| 8 µs | 8 µs | 4 µs | 4 µs | 8 µs | | 4 µs | | | |
| L-STF | L-LTF | L-SIG | RL-SIG | HE-SIG-A | HE-SIG-B | HE-STF | HE-LTF | Data | PE |
| | | | | | | HE-STF | HE-LTF | Data | PE |
| | | | | | | HE-STF | HE-LTF | Data | PE |

FIG. 5

| Common field | Per user field |
|---|---|

| Resource unit allocation subfield 1 | ... | Resource unit allocation subfield X | Center 26-tone resource unit indication | CRC | Tail |
|---|---|---|---|---|---|

| User field | User field | CRC | Tail | ... | User field | User field | CRC | Tail |
|---|---|---|---|---|---|---|---|---|

FIG. 6

EP 4 156 568 A1

S110

S130

Chip #A1

Information #A1

½ CC encoder

Chip #A2

Map to N
subchannels to
generate a data
frame #A

S140

Receive device

Data frame #A

S120

S122

Chip #A3

Interleaver #A

½ CC encoder

Chip #A4

FIG. 7

S150　Receive the chips by using at least two subchannels of N subchannels, determine information corresponding to the interleavers of the at least two subchannels, and determine the confidence of the chips #A1 to #A4

Confidence of chips #A1 and #A2

Information #A1

Confidence of chips #A3 and #A4

S160

Decoder

Interleaver #A

Decoder

Deinterleaver #A

FIG. 8

FIG. 9

S250 — Receive the chips by using at least two subchannels of N subchannels, determine information corresponding to the interleavers of the at least two subchannels, and determine the confidence of the chips #B1 to #BN

Confidence of chips #B1 and #B2

Information #B1

Confidence of chips #B3 and #B4

Confidence of chips #BN–1 and #BN

S260

Decoder

Interleaver #B1 → Decoder → Deinterleaver #B1 → ... → Interleaver #BN–1 → Decoder → Deinterleaver #BN

FIG. 10

S330

Information #C1         S310       Chip #C1

S320       S322

| Interleaver #C1 | → | RSC encoder | Chip #C2 |

| Interleaver #C2 | → | RSC encoder | Chip #C3 |

Map to N subchannels to generate a data frame #C

S340

Data frame #C

| Receive device |

| Interleaver #C3 | → | RSC encoder | Chip #C4 |

FIG. 11

EP 4 156 568 A1

Information #C1    S310    Chip #C1

S330

S320    S322

Interleaver #C1 → RSC encoder    Chip #C2

Interleaver #C2 → RSC encoder    Chip #C3

⋮

Interleaver #CN−1 → RSC encoder    Chip #CN

Map to N subchannels to generate a data frame #C

S340

Data frame #C

Receive device

FIG. 12

S350 | Receive the chips by using at least two subchannels of N subchannels, determine information corresponding to the interleavers of the at least two subchannels, and determine the confidence of the chips #C1 to #C3

Information #C1

Confidence of chip #C1    Confidence of chip #C2    Confidence of chip #C3    Confidence of chip #CN

S360

Interleaver #C1 → Decoder → Deinterleaver #C1 → Interleaver #C2 → Decoder → Deinterleaver #C2 → ... → Interleaver #CN−1 → Decoder → Deinterleaver #CN−1

FIG. 13

S410: Divide information #D1 into T segments, to generate a matrix #D including T rows

S420: Multiply the matrix #D by a precoding matrix #P including T columns to obtain a matrix #PD, where any T rows in the precoding matrix #P are linearly independent of each other

S430: Convert each row of the matrix #PD into a binary bit stream, and encode the bit stream by using a convolutional encoder to form an encoded chip

S440: Send a data frame #D through at least T subchannels of N subchannels, where the data frame #D includes at least T chips of generated chips

FIG. 14

S510: Divide information #E1 into two segments, to generate a sequence #E1 and a sequence #E2

S520: Separately interleave the sequences #E1 and #E2 by using two interleaver groups, to generate a sequence #E3 and a sequence #E4

S522: Encode the sequence #E1 to the sequence #E4, to generate a chip #E1 to a chip #E4

S530: Send a data frame #E through at least two subchannels of N subchannels, where the data frame#E includes at least two chips of the chips #E1 to #E4

FIG. 15

Communication apparatus 600

Communication unit 610

Processing unit 620

FIG. 16

Communication apparatus 700

Processor
710

Memory
730

Transceiver
720

FIG. 17

Apparatus 800

Processing
circuit
810

Storage
medium
830

Transceiver
circuit
820

FIG. 18

Access point AP

Physical layer
(MAC)

Media access
control (PHY)

FIG. 19

Station STA

Media access
control (PHY)

Physical layer
(MAC)

FIG. 20

## INTERNATIONAL SEARCH REPORT

| | International application No. |
|---|---|
| | **PCT/CN2021/098776** |

**A. CLASSIFICATION OF SUBJECT MATTER**

H04L 1/00(2006.01)i; H04W 16/06(2009.01)i; H04W 16/14(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 编码, 预编码, 卷积编码器, 递归系统卷积编码器, 交织, 交织器, 码片, 子信道, 数据帧, 矩阵, code, encoder, coder, precoding, interleaver, interlace, chip, channel, data frame, matrix

**C. DOCUMENTS CONSIDERED TO BE RELEVANT**

| Category* | Citation of document, with indication, where appropriate, of the relevant passages | Relevant to claim No. |
|---|---|---|
| A | CN 103580721 A (FUDAN UNIVERSITY) 12 February 2014 (2014-02-12) description, paragraphs [0005]-[0034] | 1-36 |
| A | CN 102804627 A (NEW JERSEY INSTITUTE OF TECHNOLOGY) 28 November 2012 (2012-11-28) entire document | 1-36 |
| A | CN 103905150 A (RESEARCH INSTITUTE OF TSINGHUA UNIVERSITY IN SHENZHEN et al.) 02 July 2014 (2014-07-02) entire document | 1-36 |
| A | CN 109672497 A (POTEVIO INFORMATION TECHNOLOGY CO., LTD.) 23 April 2019 (2019-04-23) entire document | 1-36 |
| A | US 2019207792 A1 (TEXAS INSTRUMENTS INCORPORATED) 04 July 2019 (2019-07-04) entire document | 1-36 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 August 2021** | **07 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/098776** |

## C. DOCUMENTS CONSIDERED TO BE RELEVANT

| Category* | Citation of document, with indication, where appropriate, of the relevant passages | Relevant to claim No. |
| --- | --- | --- |
| A | 3GPP. "3rd Generation Partnership Project; Technical Specification Group Radio Access Network; GSM/EDGE Overall description; Stage 2(Release 15)" *3GPP TS 43.051 V15.0.0*, 30 June 2018 (2018-06-30), entire document | 1-36 |

Form PCT/ISA/210 (second sheet) (January 2015)

## INTERNATIONAL SEARCH REPORT
### Information on patent family members

International application No.

**PCT/CN2021/098776**

| Patent document cited in search report | | | Publication date (day/month/year) | Patent family member(s) | | | Publication date (day/month/year) |
|---|---|---|---|---|---|---|---|
| CN | 103580721 | A | 12 February 2014 | None | | | |
| CN | 102804627 | A | 28 November 2012 | WO | 2010147838 | A1 | 23 December 2010 |
| | | | | US | 2010316091 | A1 | 16 December 2010 |
| | | | | US | 2013003784 | A1 | 03 January 2013 |
| CN | 103905150 | A | 02 July 2014 | None | | | |
| CN | 109672497 | A | 23 April 2019 | None | | | |
| US | 2019207792 | A1 | 04 July 2019 | CN | 110011687 | A | 12 July 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010558954X